# EUROPEAN PATENT APPLICATION

(11) **EP 4 071 744 A1**
(43) Date of publication of application: **12.10.2022**
(21) Application number: 20900446.4
(22) Date of filing: 11.12.2020
(51) Int. Cl.: G09F 9/30

(54) **ELECTRONIC APPARATUS**

(30) Priority: 13.12.2019 CN 201911282297
(71) Applicant: GUANGDONG OPPO MOBILE TELECOMMUNICATIONS CORP., LTD., Dongguan, Guangdong 523860 (CN)
(72) Inventor: YIN, Bin, Dongguan, Guangdong 523860 (CN)
(74) Representative: Ipside
(86) International application number: PCT/CN2020/135715
(87) International publication number: WO 2021/115431

(57) **Abstract**

Disclosed is an electronic apparatus (100). The electronic apparatus (100) comprises a shell (10), a reel (20), a flexible display screen assembly (30) and a limiting member (40). The shell (10) comprises a first portion (11, 12) and a second portion (13, 14), which can move relative to each other. The reel (20) is rotatably arranged on the first portion (11, 12). One end of the flexible display screen assembly (30) is fixedly connected to the second portion (13, 14), and the other end of the flexible display screen assembly is wound around the reel (20). The limiting member (40) is rotatably arranged on the first portion (11, 12), the middle portion of the flexible display screen assembly (30) is wound around the limiting member (40), and the limiting member (40) is used for limiting the shape of the flexible display screen assembly (30). The reel (20) can rotate to release the flexible display screen assembly (30) when the first portion (11, 12) and the second portion (13, 14) perform a separation motion, thereby expanding a display portion (301) of the flexible display screen assembly (30).

## Description

### CROSS REFERENCE

The present application claims priority of Chinese Patent Application No. 201911282297.4, filed on December 13, 2019, in the China National Intellectual Property Administration, the entire contents of which are hereby incorporated by reference in its entirety.

### TECHNICAL FIELD

The present disclosure relates to the field of electronic technologies, and in particular to an electronic device.

### BACKGROUND

Users use mobile terminals more and more frequently, and usage scenarios are becoming increasingly diversified. At present, most portable smart mobile terminals have small screen sizes, usually smaller than 7 inches. Compared with products such as tablets, the screen display area is limited and the user experience is limited. However, for a mobile terminal with a larger screen size, for example, a mobile terminal larger than 7 inches, although the screen size is increased, the overall size of the mobile terminal is larger, which is inconvenient to carry.

### SUMMARY OF THE DISCLOSURE

The present disclosure provides an electronic device.

An electronic device, comprising:
a housing, comprising a first portion and a second portion that are capable of moving relatively;
a reel, rotatably arranged in the first portion;
a limiting member, rotatably arranged in the first portion; and
a flexible display screen assembly; wherein an end of the flexible display screen assembly is connected to the second portion, and the other end of the flexible display screen assembly is arranged on the reel; a middle portion of the flexible display screen assembly is wound on the limiting member; the limiting member is configured to limit a shape of the flexible display screen assembly;
wherein in condition of the first portion and the second portion performing a relative movement away from each other, the reel is capable of rotating to release the flexible display screen assembly, for expanding a display portion of the flexible display screen assembly.

An electronic device, comprising:
a housing, comprising a first portion and a second portion that are capable of moving relatively;
a reel, rotatably arranged in the first portion;
a limiting member, rotatably arranged in the first portion; and
a flexible display screen assembly; wherein an end of the flexible display screen assembly is connected to the second portion, and the other end of the flexible display screen assembly is arranged on the reel; a middle portion of the flexible display screen assembly is wound on the limiting member; the limiting member is configured to limit a shape of the flexible display screen assembly;
wherein in condition of the first portion and the second portion being away from each other, a display portion of the flexible display screen assembly is expanded.

An electronic device, comprising:
a housing, comprising a first portion and a second portion that are capable of moving relatively;
a limiting member, rotatably arranged in the first portion; and
a flexible display screen assembly; wherein an end of the flexible display screen assembly is connected to the second portion, and the other end of the flexible display screen assembly is arranged in the housing; a middle portion of the flexible display screen assembly is wound on the limiting member; the limiting member is configured to limit a shape of the flexible display screen assembly;
wherein in condition of the first portion and the second portion performing a relative movement away from each other, a portion of the flexible display screen assembly within the housing at least partially protrudes from the housing, for expanding a display portion of the flexible display screen assembly.

Additional aspects and advantages of the embodiments of the present disclosure will be given in part in the following description, and will become apparent in part from the following description, or from the practice of the embodiments of the present disclosure.

### BRIEF DESCRIPTION OF THE DRAWINGS

The above and/or additional aspects and advantages of the present disclosure will become obvious and easy to understand from the description of the embodiments in conjunction with the following drawings:
FIG. 1 is a structural schematic view of an electronic device according to an embodiment of the present disclosure.
FIG. 2 is another structural schematic view of an electronic device according to an embodiment of the present disclosure.
FIG. 3 is an exploded structural schematic view of an electronic device according to an embodiment of the present disclosure.
FIG. 4 is a plan schematic view of an electronic device according to an embodiment of the present disclosure.
FIG. 5 is a schematic cross-sectional view of the electronic device in FIG. 4 along a line V-V.
FIG. 6 is another plan schematic view of an electronic device according to an embodiment of the present disclosure.
FIG. 7 is a schematic cross-sectional view of the electronic device in FIG. 6 along a line VII-VII.
FIG. 8 is a partial structural schematic view of an electronic device according to an embodiment of the present disclosure.
FIG. 9 is a structural schematic view of a second portion of a housing of an electronic device according to an embodiment of the present disclosure.
FIG. 10 is another structural schematic view of a second portion of a housing of an electronic device according to an embodiment of the present disclosure.
FIG. 11 is further another structural schematic view of an electronic device according to an embodiment of the present disclosure.
FIG. 12 is further another structural schematic view of an electronic device according to an embodiment of the present disclosure.
FIG. 13 is further another structural schematic view of an electronic device according to an embodiment of the present disclosure.
FIG. 14 is further another structural schematic view of an electronic device according to an embodiment of the present disclosure.
FIG. 15 is a schematic cross-sectional view of an electronic device according to an embodiment of the present disclosure.
FIG. 16 is another schematic cross-sectional view of an electronic device according to an embodiment of the present disclosure.
FIG. 17 is further another schematic cross-sectional view of an electronic device according to an embodiment of the present disclosure.
FIG. 18 is a structural schematic view of recovery mechanism of an electronic device according to an embodiment of the present disclosure.
FIG. 19 is a structural schematic view of a snap-in structure of an electronic device according to an embodiment of the present disclosure.
FIG. 20 is another structural schematic view of a snap-in structure of an electronic device according to an embodiment of the present disclosure.
FIG. 21 is further another structural schematic view of an electronic device according to an embodiment of the present disclosure.
FIG. 22 is further another structural schematic view of an electronic device according to an embodiment of the present disclosure.
FIG. 23 is further another structural schematic view of an electronic device according to an embodiment of the present disclosure.
FIG. 24 is further another structural schematic view of an electronic device according to an embodiment of the present disclosure.
FIG. 25 is further another schematic cross-sectional view of an electronic device according to an embodiment of the present disclosure.
FIG. 26 is further another schematic cross-sectional view of an electronic device according to an embodiment of the present disclosure.

### DETAILED DESCRIPTION

The implementation of the present disclosure will be further described below in conjunction with the accompanying drawings. Same or similar reference numerals in the drawings indicate same or similar elements or elements with same or similar functions throughout.

In addition, the implementation manners of the present disclosure described below in conjunction with the drawings are exemplary, and are only intended to explain the implementation manners of the present disclosure, and should not be construed as limiting the present disclosure.

The following disclosure provides many different embodiments or examples for realizing different structures of the present disclosure. In order to simplify the disclosure of the present disclosure, the components and settings of specific examples are described below. Of course, they are only examples, and are not intended to limit the present disclosure. In addition, the present disclosure may repeat reference numerals and/or reference letters in different examples. Such repetition is for the purpose of simplification and clarity, and does not indicate the relationship between the various embodiments and/or settings discussed.

The electronic device in embodiments of the present disclosure includes a housing, including a first portion and a second portion that are capable of moving relatively; a reel, rotatably arranged in the first portion; a limiting member, rotatably arranged in the first portion; and a flexible display screen assembly. An end of the flexible display screen assembly is connected to the second portion, and the other end of the flexible display screen assembly is arranged on the reel. A middle portion of the flexible display screen assembly is wound on the limiting member. The limiting member is configured to limit a shape of the flexible display screen assembly. In condition of the first portion and the second portion performing a relative movement away from each other, the reel is capable of rotating to release the flexible display screen assembly, for expanding a display portion of the flexible display screen assembly.

In some embodiments, the flexible display screen assembly includes a flexible display screen and a flexible support stacked and fixedly connected to the flexible display screen; an end of the flexible support is connected to the reel; the flexible support is connected to the limiting member; in condition of the first portion and the second portion performing the relative movement away from each other, the flexible support is capable of rotating the limiting member, and the flexible support abuts against the first portion to keep the flexible display screen flat.

In some embodiments, the flexible support includes a first tooth portion, and the limiting member includes a second tooth portion engaging with the first tooth portion.

In some embodiments, the limiting member includes a rotating shaft, and the middle portion of the flexible display screen assembly is wound on the rotating shaft; in condition of the first portion and the second portion performing the relative movement away from each other, the flexible display screen assembly is configured to drive the rotating shaft to rotate by a frictional resistance with the rotating shaft.

In some embodiments, in condition of the first portion and the second portion performing a relative movement closer to each other, the reel is capable of rotating to reel in the flexible display screen assembly, for reducing the display portion of the flexible display screen assembly;
during an expansion process of the display portion of the flexible display screen assembly, the flexible display screen assembly is configured to rotates the limiting member in a first direction; during a reduction process of the display portion of the flexible display screen assembly, the flexible display screen assembly is configured to rotates the limiting member in a second direction; the first direction is opposite to the second direction.

In some embodiments, the first portion includes a first top plate; in condition of the first portion and the second portion being away from each other, the flexible support is disposed between the flexible display screen and the first top plate, to fill a gap between the flexible display screen and the first top plate.

In some embodiments, the first portion defines an accommodating space and a first opening connected to the accommodating space; the limiting member is arranged in the accommodating space and corresponds to the first opening, and the middle portion of the flexible display screen assembly is configured to pass through the first opening and is wound on the limiting member.

In some embodiments, the first portion includes a first side plate disposed on a side away from the second portion, and the limiting member is disposed near the side plate.

In some embodiments, the first portion further includes a second side plate and a third side plate; the second side plate is connected to an end of the first side plate, and the third side plate is connected to the other end of the first side plate; the first side plate, the second side plate, and the third side plate enclose the accommodating space; the limiting member is rotatably arranged on the second side plate and the third side plate.

In some embodiments, the electronic device further includes a cover; wherein a bottom of the accommodating space is open, and the cover and the first portion are connected and cover the accommodating space.

In some embodiments, the electronic device further includes a driving mechanism connected to the second portion and configured to drive the second portion to perform the relative movement away from the first portion, for driving the flexible display screen assembly to move, such that the display portion of the flexible display screen assembly is expanded.

In some embodiments, the driving mechanism includes a motor and a first transmission structure connected to the motor and the second portion; the motor is configured to drive the second portion to move relative to the first portion through the first transmission structure.

In some embodiments, the first transmission structure includes a first transmission gear connected to the motor and a rack fixed to the second portion, the rack engaging with the first transmission gear.

In some embodiments, the driving mechanism further includes a second transmission structure connected to the reel and the first transmission gear; the motor is configured to drive the second portion to perform the relative movement away from the first portion, while driving the reel to rotate through the second transmission structure to release the flexible display screen assembly.

In some embodiments, the second transmission structure includes a second transmission gear and a third transmission gear; the second transmission gear is fixed on the reel, and the third transmission gear is rotatably arranged on the first portion and engages with the second transmission gear and the first transmission gear; the first transmission gear is disposed on a side of the third transmission gear, and the second transmission gear is disposed on the other side of the third transmission gear opposite to the first transmission gear.

In some embodiments, the electronic device further includes a camera arranged on the second portion.

In some embodiments, the electronic device further includes a cover; wherein the cover includes a first connecting portion and a second connecting portion capable of moving relative to the first connecting portion; the first connecting portion is fixedly connected to the first portion, and the second connection is fixedly connected to the second portion; the camera is configured to collect images through the second connecting portion and the second portion.

In some embodiments, the electronic device further includes a recovery mechanism connected to the reel and configured to apply a force to the flexible display screen assembly, such that the flexible display screen assembly maintains a tendency to be wound on the reel.

The electronic device in other embodiments of the present disclosure includes a housing, including a first portion and a second portion that are capable of moving relatively; a reel, rotatably arranged in the first portion; a limiting member, rotatably arranged in the first portion; and a flexible display screen assembly. An end of the flexible display screen assembly is connected to the second portion, and the other end of the flexible display screen assembly is arranged on the reel. A middle portion of the flexible display screen assembly is wound on the limiting member. The limiting member is configured to limit a shape of the flexible display screen assembly. In condition of the first portion and the second portion being away from each other, a display portion of the flexible display screen assembly is expanded.

The electronic device in further other embodiments of the present disclosure includes a housing, including a first portion and a second portion that are capable of moving relatively; a limiting member, rotatably arranged in the first portion; and a flexible display screen assembly; wherein an end of the flexible display screen assembly is connected to the second portion, and the other end of the flexible display screen assembly is arranged in the housing; a middle portion of the flexible display screen assembly is wound on the limiting member; the limiting member is configured to limit a shape of the flexible display screen assembly;
wherein in condition of the first portion and the second portion performing a relative movement away from each other, a portion of the flexible display screen assembly within the housing at least partially protrudes from the housing, for expanding a display portion of the flexible display screen assembly.

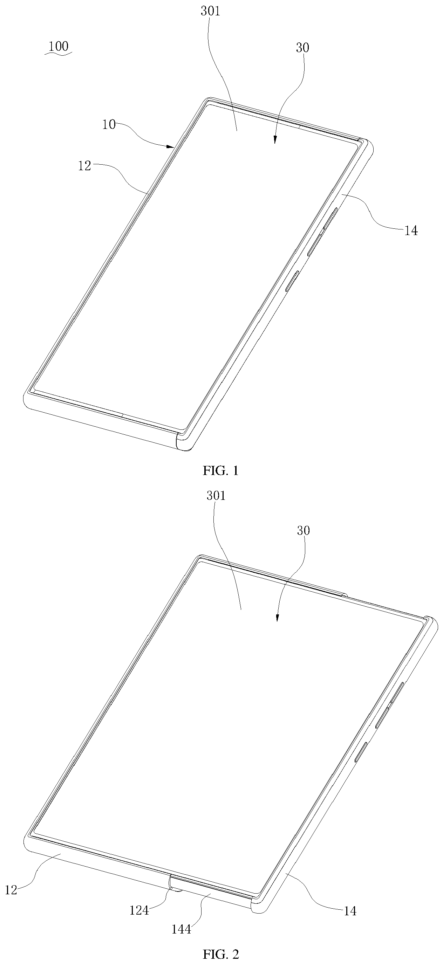

Referring to FIGS. 1 to 3, the electronic device 100 in an embodiment of the present disclosure includes a housing 10, a reel 20, a flexible display screen assembly 30, a limiting member 40, a cover 50, a camera 60, a main board 101, and a driving mechanism 70. The reel 20, the flexible display screen assembly 30, the limiting member 40, the cover 50, the camera 60, the main board 101, and the driving mechanism 70 may all be arranged in the housing 10. It is understandable that the electronic device 100 in the embodiment of the present disclosure may be, but is not limited to, electronic device such as mobile phone, tablet, or other portable electronic devices. In this document, the electronic device 100 is a mobile phone as an example for description.

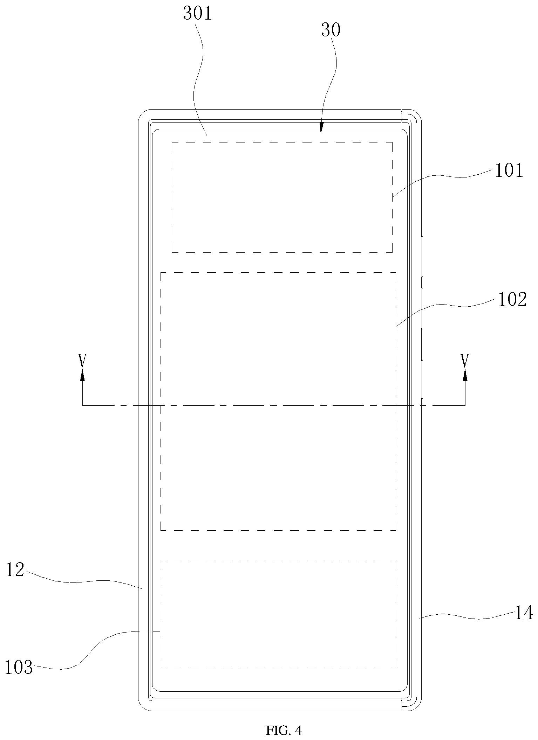

Referring to FIGS. 4 to 7, in the embodiment, the housing 10 includes a first portion 12 and a second portion 14. The first portion 12 and the second portion 14 can move relative to each other. Specifically, in the embodiment, the first portion 12 and the second portion 14 are slidably connected, that is, the second portion 14 can slide relative to the first portion 12.

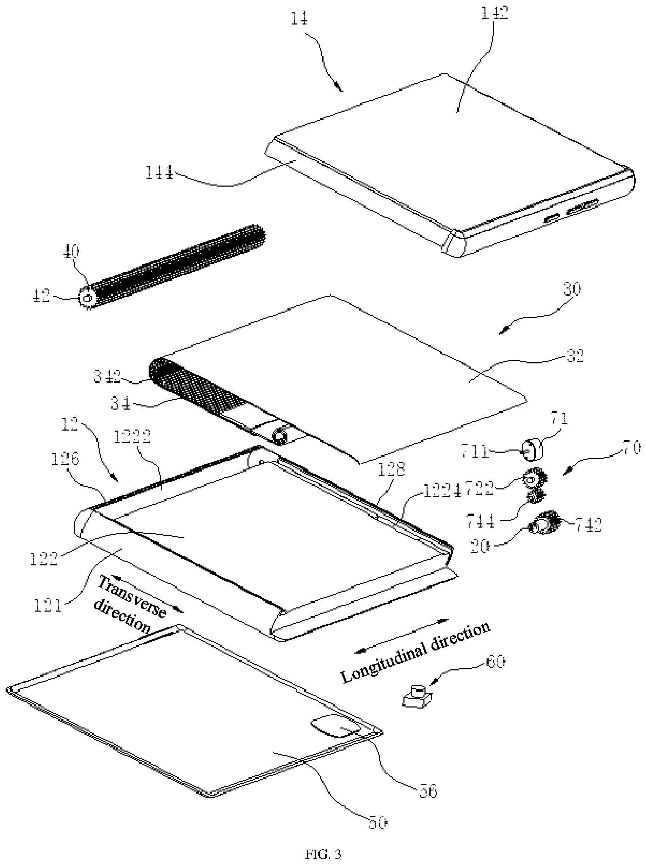

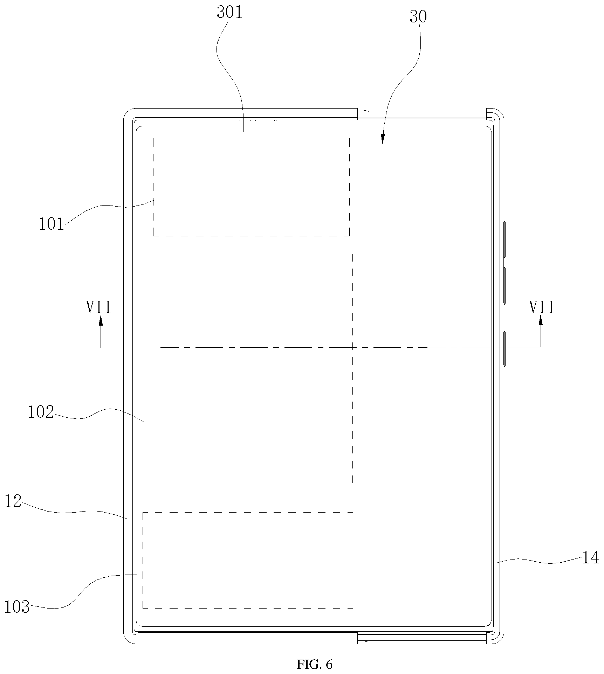

Referring to FIGS. 3 to 7, in some embodiments, the first portion 12 may be substantially rectangular, and the first portion 12 defines an accommodating space 120, and a bottom of the accommodating space 120 is open. The accommodating space 120 may be configured to place components such as the reel 20, the limiting member 40, the camera 60, the main board 101, and the driving mechanism 70. Of course, referring to FIGS. 4 and 6, the accommodating space 120 may be further configured to stack other electrical components of the electronic device 100, such as a battery 102, a sub-board 103, and the sub-board 103 may be configured to arrange electrical components such as a speaker and a microphone of electronic device 100.

To achieve lightness and thinness, the space for stacking electrical components inside the electronic device 100 is very limited. In the embodiments, the reel 20 is arranged in the first portion 12 to accommodate the flexible display screen assembly 30, which takes up little space and may provide a larger space for the stacking design of other electrical components.

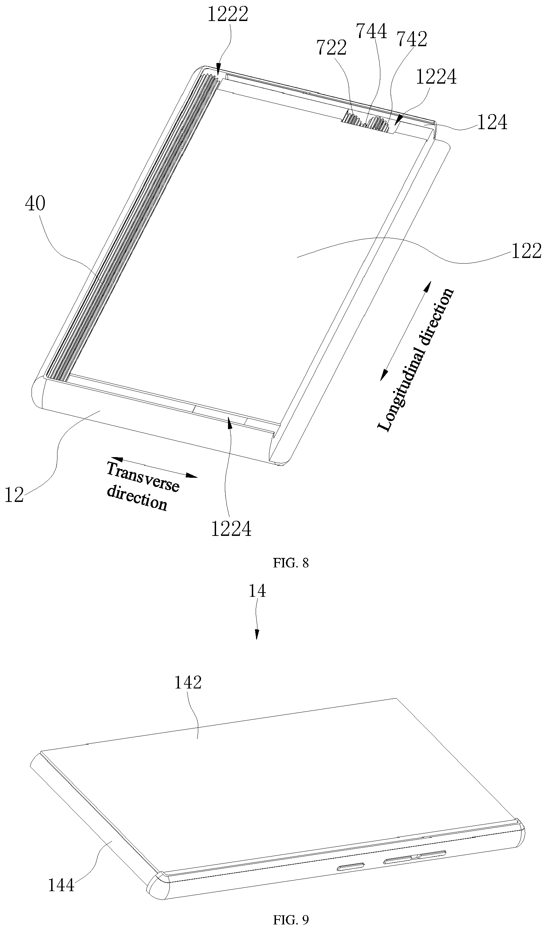

Further referring to FIGS. 3 and 8, the first portion 12 includes a first top plate 122, a first side plate 126, a second side plate 128, and a third side plate 121. The first side plate 126 is disposed on a side away from the second portion 14. The second side plate 128 is connected to an end of the first side plate 126, and the third side plate 121 is connected to the other end of the first side plate 126. The second side plate 128 and the third side plate 121 are connected to the first top plate 122. The first top plate 122, the first side plate 126, the second side plate 128 and the third side plate 121 jointly enclose the accommodating space 120. The first top plate 122 defines a first opening 1222 and a second opening 1224, and the first opening 1222 and the second opening 1224 are both connected to the accommodating space 120. An opening direction of the first opening 1222 is perpendicular to an opening direction of the second opening 1224. The first opening 1222 is configured for an end of the flexible display screen assembly 30 to pass through, such that the end of the flexible display screen assembly 30 is connected to the reel 20. The second opening 1224 is configured for the driving mechanism 70 to be exposed from the accommodating space 120, for connecting to the second portion 12.

Specifically, referring to FIGS. 3 and 8, in the embodiments, the first opening 1222 may be defined along a longitudinal direction of the electronic device 100, and the second opening 1224 may be defined along a lateral direction of the electronic device 100. The number of the second openings 1224 may be two, and the two second openings 1224 are disposed on both sides of the first top plate 122 and are symmetrically arranged along the longitudinal direction.

The second portion 14 can move relative to the first portion 12 along the lateral direction of the electronic device 100. In addition, the first portion 12 defines a sliding groove 124, and the sliding groove 124 is configured to cooperate with the second portion 14 to enable the second portion 14 to slide relative to the first portion 12.

It should be noted that in the description of the present disclosure, the orientation or positional relationship indicated by terms "center", "longitudinal", "transverse", "length", "width", "thickness", "upper", "lower", "vertical", "horizontal", "top", "bottom", "inner", and "outer" is based on the orientation or positional relationship shown in the drawings, and is intended only to facilitate and simplify the description of the present disclosure, not to indicate or imply that the device or element referred to must have a particular orientation, be constructed and operate in a particular orientation, and therefore is not to be construed as a limitation of the present disclosure. Furthermore, the terms "first" and "second" are intended for descriptive purposes only and are not to be construed as indicating or implying relative importance or implicitly specifying the number of technical features indicated. Thus, the features defined with "first" and "second" may explicitly or implicitly include one or more of the described features. In the description of the present disclosure, "plurality" means two or more, unless otherwise expressly and specifically limited.

Referring to FIGS. 3, 5 and 7, the second portion 14 is disposed on the first portion 12. The second portion 14 may also be substantially rectangular. The second portion 14 includes a sliding portion 144 and a second top plate 142. The sliding portion 144 is connected to two longitudinal sides of the second top plate 142 and is arranged substantially symmetrically. The sliding portion 144 is configured to cooperate with the sliding groove 124 of the first portion 12 to realize the sliding connection between the first portion 12 and the second portion 14, and the attachment between the second top plate 142 and the first top plate 122. It should be noted that in the description, "attachment" may be understood as contact between two elements but does not affect the sliding between them, or may be understood as a gap between the two is within an assembly error.

It should be noted that in the present disclosure, unless expressly stipulated and defined otherwise, a first feature being "upper" or "lower" a second feature may include direct contact between the first feature and the second feature, or include contact between the first feature and the second feature not directly but through a separate feature between them. Moreover, the first feature being "above", "on" and "on top of' the second feature includes the first feature being directly above and obliquely above the second feature, or simply means that the level of the first feature is higher than that of the second feature. The first feature being "below", "under" and "on bottom of" the second feature include the first feature directly below and obliquely below the second feature, or simply means that the level of the first feature is lower than the second feature.

It can be understood that, in the embodiments, the second portion 14 can slide relative to the first portion 12 to move away from or approach the first portion 12. In the embodiments, "the first portion 12 and the second portion 14 move away from each other" may be understood as the second portion 14 sliding relative to the first portion 12 and the sliding direction being away from the first portion 12. In addition, in the embodiments, the first portion 12 and the second portion 14 can also move toward each other, and the two moving toward each other may be understood as the second portion 14 sliding relative to the first portion 12 and the sliding direction is toward the first portion 12.

It should also be noted that in the description of the present disclosure, unless otherwise clearly specified and limited, the terms "installation", "connection", and "coupling" should be understood in a broad sense. For example, it can be a fixed connection, a removable connection, or a one-piece connection; it can be a mechanical connection; it can be a direct connection or an indirect connection through an intermediate medium; it can be a connection within two components or an interaction between two components. To those skilled in the art, the specific meaning of the above terms in the present disclosure may be understood on a case-by-case basis.

Referring to FIGS. 1, 4, and 5, in the embodiments, when the first portion 12 and the second portion 14 are moving in opposite directions to a limit position (i.e., when the first portion 12 and the second portion 14 are moving close to each other until the first portion 12 and the second portion 14 fit together), the first portion 12 and the second portion 14 form the housing 10, substantially rectangular in shape, as a whole. Referring to FIGS. 2, 6, and 7, when the first portion 12 and the second portion 14 are moving in in anti-opposite directions (i.e., when the first portion 12 and the second portion 14 are moving away from each other), the second portion 14 is away from the first portion 12.

Referring to FIG. 3, FIG. 5 and FIG. 7, the reel 20 is rotatably disposed at the first portion 12. Specifically, the reel 20 is rotatably disposed in the accommodating space 120. That is, the reel 20 is arranged on the first portion 12 and can rotate relative to the first portion 12. The reel 20 is configured to connect with the driving mechanism 70 such that the reel 20 can rotate relative to the first portion 12 under the driving of the driving mechanism 70 to release or retract the flexible display screen assembly 30.

It can be understood that the reel 20 being rotatably disposed on the first portion 12 may mean that the reel 20 is directly arranged on the first portion 12, or mean that the reel 20 is arranged on the first portion 12 through other medium.

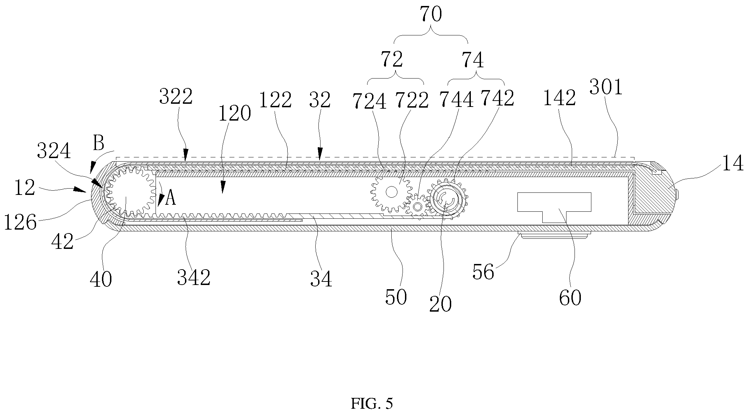

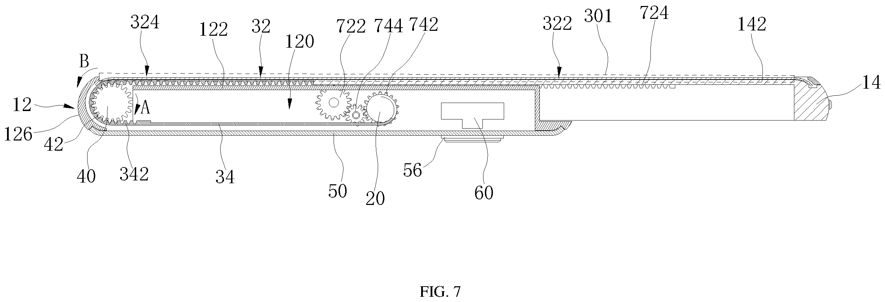

In addition, referring to FIGS 5 and 7, an end of the flexible display screen assembly 30 is connected to the second portion 14. In the embodiments, the end is fixedly connected to the second portion 14. In other embodiments, the end may be connected to the second portion 14 by a movable mechanism. For example, the movable mechanism may be a structure for adjusting the tightness of the flexible display screen assembly 30. The other end of the flexible display screen assembly 30 is arranged on the reel 20 such that a portion of the flexible display screen assembly 30 can be wound on the reel 20. The other end is wound on the reel 20. The reel 20 may be configured to wind up the flexible display screen assembly 30 and release the flexible display screen assembly 30. When the first portion 12 and the second portion 14 move away from each other, the reel 20 can rotate to release the flexible display screen assembly 30 so as to expand a display portion 301 of the flexible display screen assembly 30. Specifically, an end of the flexible display screen assembly 30 is fixedly connected to the second portion 14, and the other end passes through the first opening 1222 of the first portion 12 and is connected to the reel 20 arranged in the accommodating space 120.

In this way, when the first portion 12 and the second portion 14 move away from each other, the reel 20 can rotate to release the flexible display screen assembly 30, thereby expanding the display portion 301 of the flexible display screen assembly 30. In this way, the size of the screen display region of the electronic device 100 may be adjusted freely, and the display portion 301 of the flexible display screen assembly 30 may be expanded when a large screen is needed to improve the user's operating experience. In addition, when a large screen in not needed, the display portion 301 may not be expanded such that the size of the whole machine is small for convenient carrying.

It is understandable that referring to FIG. 5, in a case where the first portion 12 and the second portion 14 are closely connected together, the display portion 301 of the flexible display screen assembly 30 is not expanded, and the electronic device 100 is in a narrow screen mode. In this case, a portion of the flexible display screen assembly 30 is wound on the reel 20, and another portion is disposed above the first top plate 122 and exposed from the housing 10 for display. It should be noted that in the embodiments, the "display portion 301 of the flexible display screen assembly 30 "may be understood as the portion disposed above the second top plate 142 of the second portion 14, that is, the portion exposed from the housing 10.

Referring to FIG. 7, when the display portion 301 of the flexible display screen assembly 30 is needed to be expanded, the first portion 12 and the second portion 14 move away from each other, such that the second portion 14 may drive the flexible display screen assembly 30 to extend. In this case, the reel 20 may release the flexible display screen assembly 30, thereby increasing the display portion 301 of the flexible display screen assembly 30, thereby improving the user's operating experience and requirements. In this case, the electronic device 100 is in an extended mode.

It can be understood that there is a limit position when the second portion 14 and the first portion 12 move away from each other. When in the limit position, the display region of the electronic device 100 is the largest, that is, a region of the flexible display screen 32 exposed from the housing 10 is the largest, also the area of the display portion 301 of the flexible display screen assembly 30 is the largest (as shown in FIG. 7). When the first portion 12 and the second portion 14 are close and connected together, the display region of the electronic device 100 is the smallest, that is, the display portion 301 of the flexible display screen assembly 30 is the smallest, also the area of the display portion 301 of the flexible display screen assembly 30 is the smallest (as shown in FIG. 5).

In the embodiments, an end of the flexible display screen assembly 30 being fixedly connected to the second portion 14 may mean that the end of the flexible display screen assembly 30 is directly fixed to the second portion 14, or the flexible display screen assembly 30 is fixed to the second portion 14 by other medium. The end of the flexible display screen assembly 30 cannot move relative to the second portion 14.

In the embodiments of the present disclosure, an end of the flexible display screen assembly 30 refers to a first edge of the flexible display screen assembly 30, and the other end of the flexible display screen assembly 30 refers to a second edge of the flexible display screen assembly 30. The second edge is arranged opposite to the first edge.

Specifically, referring to FIGS. 3, 5, and 7, the flexible display screen assembly 30 includes a flexible display screen 32 and a flexible support 34. The flexible display screen 32 and the flexible support 34 are stacked and fixedly connected.

Referring to FIG. 5, the flexible display screen 32 includes a first region 322 and a second region 324 connected to the first region 322. The first region 322 is attached to the second top plate 142, the first region 322 faces the second top plate 142, and the first region 322 may be fixedly connected to the second top plate 142 by optically clear adhesive (OCA). At least a portion of the second region 324 is disposed in the accommodating space 120 of the first portion 12 and attached to the flexible support 34.

The flexible support 34 is disposed at a bottom of the second region 324 and completely covers the second region 324. The flexible support 34 may also be fixedly connected to the second region 324 by OCA. In an example shown in FIGS. 5 and 7, the flexible support 34 completely covers and extends beyond the second region 324, and an excess portion of the flexible support 34 is connected to the reel 20, that is, the excess portion is wound on the reel 20. Referring to FIG. 5, when the electronic device 100 is in the narrow screen mode, the flexible support 34 is wound and arranged on the reel 20, and the flexible display screen 32 is roughly "U"-shaped. In this way, the support area of the flexible support 34 is relatively large, which can reduce the pressing and deformation of the flexible display 32.

In this way, when the electronic device 100 is in the narrow screen mode (that is, when the first portion 12 and the second portion 14 are moved to the limit position), the reel 20 only reels the flexible support 34, while the flexible display 32 is not directly reeled in by the reel 20, such that the degree and number of times the flexible display 32 is bent may be reduced, and the service life of the flexible display 32 may be increased. Of course, it can be understood that in other embodiments, the flexible display screen 32 may face completely the flexible support 34, and both the flexible display screen 32 and the flexible support 34 are connected to the reel 20. The reel 20 can reel in and release both the flexible support 34 and the flexible display screen 32 at the same time, of which the specific setting method is not limited herein. In addition, the flexible support 34 completely covers the second region 324, and the support area of the flexible support 34 is relatively large, which may reduce the pressing and deformation of the flexible display screen 32.

In addition, in the embodiments, the flexible display screen 32 is roughly in the shape of a "U", and electrical components such as the main board 101, the sub-board 103, a sensor, and the battery 102 of the electronic device 100 may be received in a space enclosed by the flexible display screen assembly 30. In this way, the arrangement of the flexible display screen assembly 30 does not affect the placement of electrical components such as the main board 101 and the battery 102, which effectively improves space utilization, and facilitates the stacking and placement of electrical components such as the main board 101 and the battery 102.

Referring to FIGS. 5 and 7, in the embodiments, when the first portion 12 and the second portion 14 move away from each other, the flexible support 34 may abut against the first portion 12 to keep the display portion 301 of the flexible display screen 32 flat.

Specifically, when the first portion 12 and the second portion 14 are away from each other, the flexible support 34 is disposed opposite to the first top board 122 and is attached to the first top board 122. The flexible support 34 is disposed between the flexible display screen 32 and the first top board 122 and fills a gap between the flexible display screen 32 and the first top board 122. That is, the thickness of the flexible support 34 is equal to a distance between an upper surface of the first portion 12 and an upper surface of the second portion 14.

It can be understood that, referring to FIG. 7, when the first portion 12 and the second portion 14 move away from each other, there is a height difference between the upper surface of the first top plate 122 and the upper surface of the second top plate 142, and the flexible display screen 32 is fixedly connected to the upper surface of the second top plate 142. In this case, the flexible support 34 abuts against the first top plate 122 of the first portion 12, that is, the flexible support 34 fills the gap between the flexible display screen 32 and the first top plate 122. In other words, since the first top plate 122 and the second top plate 142 are attached up and down, the flexible display screen 32 is fixedly connected to the upper surface of the second top plate 142. Therefore, the thickness of the flexible support 34 is equal to the thickness of the second top plate 142 and fills the height difference between the first top plate 122 and the second top plate 142, that is, fills the gap between the flexible display screen 32 and the first top plate 122, such that the flexible display screen 32 may be kept flat during movement, thereby preventing the flexible display 32 from collapsing when it is touched and pressed when the electronic device 100 is in the extended mode, improving the user's operating experience.

In addition, referring to FIGS. 3, 5, and 7, a bottom of the flexible support 34 may be formed with a first tooth portion 342, the first tooth portion 342 is configured to engage with the limiting member 40 such that the limiting member 40 can support the flexible display screen assembly 30 and keep the flexible display screen assembly 30 to move smoothly.

In addition, in the embodiments, the flexible support 34 may be made of a magnetic material, the first top plate 122 may be made of a metal material that can be magnetized, or the first top plate 122 includes a metal layer that can be magnetized coated on a surface. In this way, when the second portion 14 moves away from the first portion 12 to expand the display portion 301 of the flexible display screen assembly 30, the flexible support 34 can be adsorbed on the first top plate 122. In this way, the flexible display screen assembly 30 may be prevented from being misplaced or shifted during operation.

Referring to FIGS. 5, 7 and 8, the limiting member 40 is rotatably arranged in the accommodating space 120 of the first portion 12 and corresponds to the first opening 1222. A middle portion of the flexible display screen assembly 30 is arranged around the limiting member 40. The limiting member 40 is configured to limit the shape of the flexible display screen assembly 30.

Specifically, in the embodiments, the limiting member 40 is rotatably disposed on the second side plate 128 and the third side plate 121 and disposed close to the first side plate 126. In this way, the limiting member 40 is disposed on a side of the accommodating space 120 of the first portion 12, which may make the space on the side of the limiting member 40 larger, beneficial to the stacking and placement of the electrical components of the electronic device 100. The limiting member 40 may be in the shape of a column. A second tooth portion 42 is formed on a circumference of the limiting member 40. The second tooth portion 42 is configured to engage with the first tooth portion 342 on the flexible support 34 to support the flexible display screen assembly 30 and to guide the extension of the flexible display screen assembly 30. It can be understood that the middle portion of the flexible display screen assembly 30 may be understood to be a part disposed between the two ends of the flexible display screen assembly 30.

In this way, the limiting member 40 can limit the shape of the flexible display screen assembly 30 such that the display portion 301 of the flexible display screen assembly 30 may be in a flat state, that is, the flexible display screen assembly 30 may be maintained in a U-shaped state. In addition, the engagement of the limiting member 40 and the flexible support 34 may not only support the flexible display screen assembly 30, but also guide when the second portion 14 drives the flexible display screen assembly 30 to move, to keep the flexible display screen assembly 30 to move stably.

Specifically, in the embodiments, the limiting member 40 may be a guide gear, and the limiting member 40 is disposed at a position corresponding to the first opening 1222. The middle portion of the flexible display screen assembly 30 is wound around the limiting member 40, and the first tooth portion 342 and the second tooth portion 42 engage with each other on the flexible support 34. That is, an end of the flexible display screen assembly 30 is fixedly connected to the second portion 14, and the other end is connected to the reel 20 after passing through the first opening 1222 and wrapping around the limiting member 40. When the second portion 14 drives an end of the flexible display screen 32 to move, the limiting member 40 is gradually rotated under the drive of the flexible support 34, and the reel 20 gradually releases an end of the flexible support 34. That is, in the embodiments, when the first portion 12 and the second portion 14 move away from each other to expand the display portion 301 of the flexible display screen assembly 30, the flexible support can drive the limiting member 40 to rotate.

Referring to FIGS. 5 and 7, in the embodiments, when the first portion 12 and the second portion 14 move towards each other, the reel 20 can rotate to retract the flexible display screen assembly 30, thereby reducing the display portion 301 of the flexible display screen assembly 30.

When the display portion 301 of the flexible display screen assembly 30 is expanded, the flexible display screen assembly 30 drives the limiting member 40 to rotate in a first direction A. When the display portion 301 of the flexible display screen assembly 30 is reduced, the flexible display screen assembly 30 drives the limiting member 40 to rotate in a second direction B. The second direction B is opposite to the first direction A.

Specifically, in the orientation shown in the drawings, the first direction A is a clockwise direction, and the second direction B is a counterclockwise direction.

It is understandable that, in other embodiments, the limiting member 40 may not be formed with the second tooth portion 42, but directly be a rotating shaft. The flexible support 34 may not be formed with the first tooth portion 342. The limiting member 40 and the flexible support 34 are directly connected by rolling and friction. The middle portion of the flexible display screen assembly 30 is wound on the rotating shaft. When the first portion 12 and the second portion 14 move away from each other, the flexible display screen assembly 30 drives the rotating shaft to rotate by frictional resistance with the rotating shaft, such that the limiting member 40 may likewise support and guide the flexible display screen 32.

Referring to FIGS. 5, 7 and 10, in the embodiments, the camera 60 may be disposed in the accommodating space 120 of the first portion 12, and the cover 50 is connected to the first portion 12 and covers the accommodating space 120. The camera 60 may perform image capture through the cover 50. That is, in the embodiments, the first portion 12 and the cover 50 may form a whole. When the second portion 14 moves relative to the first portion 12, the camera 60 will not follow to move. When in the extended mode, the camera 60 is disposed in the middle of the entire flexible display screen 32.

In the embodiments, the cover 50 is detachably connected to the first portion 12, such that the cover 50 may be easily removed to repair and replace the electrical components such as the main board 101, the battery 102 or the sensor stacked in the accommodating space 120. It can be understood that in other embodiments, the cover 50 and the first portion 12 may also be an integral structure, and the two are integrally formed, which is not limited herein.

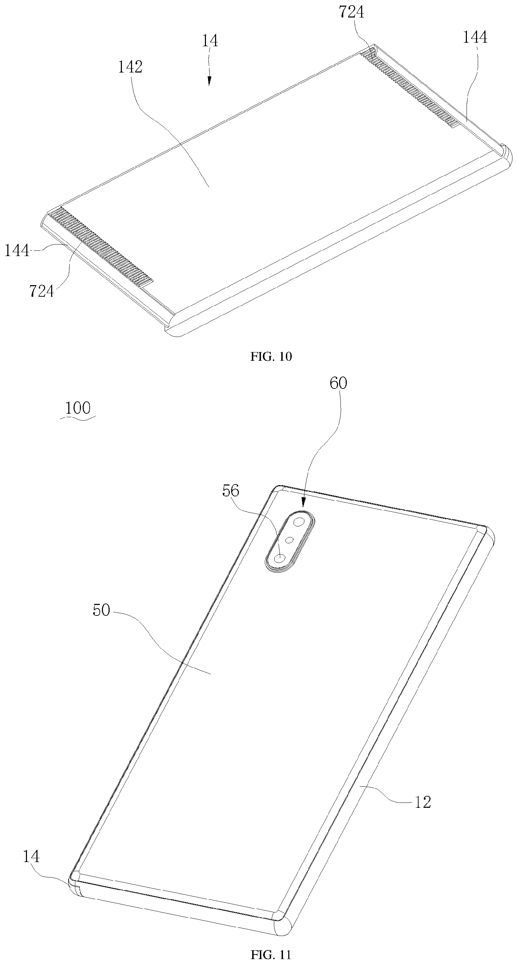

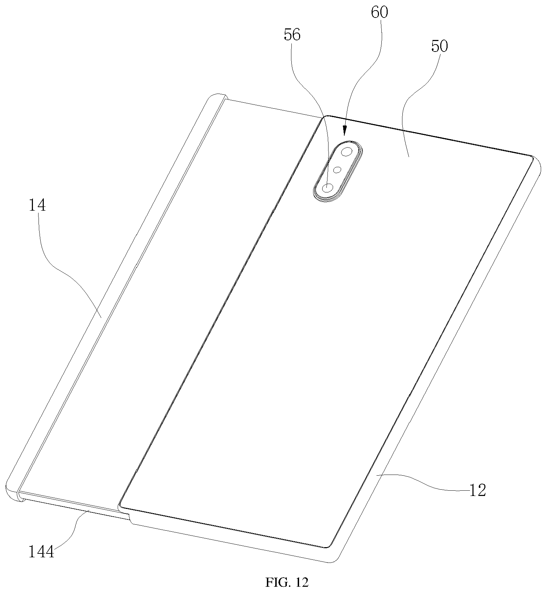

In addition, referring to FIGS. 11 and 12, the cover 50 may be arranged with a light-transmitting portion 56 facing the position of the camera 60. Light can pass through the light-transmitting portion 56 to be received by the camera 60 to enable the camera 60 to perform image capture through the cover 50 for external photography. In this way, the light-transmitting portion 56 may protect the camera 60 without affecting the shooting effect of the camera 60, thereby preventing the camera 60 from being directly exposed outside the housing 10 and accidentally scratching the camera 60. In this case, the camera 60 may be a rear camera of a mobile phone, and the rear camera may perform image capture through the light-transmitting portion 56 on the cover 50. It is understandable that, in some embodiments, the camera 60 may be a front camera of a mobile phone. In this case, the camera 60 may perform image capture through a hole on the flexible display screen assembly 30 or a hole on the housing 10, or through a pop-up or slide-out mechanism. When the front camera is needed to be used, the camera 60 may be popped or slid out of the housing 10 through the pop-up mechanism or the slide-out mechanism, which can improve the screen-to-body ratio of the electronic device 100.

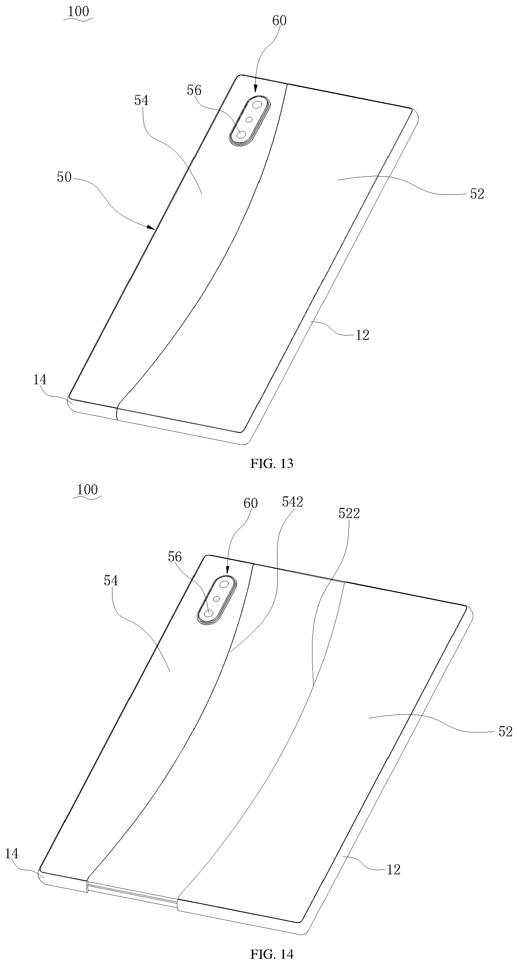

It is understandable that, referring to FIGS. 13 and 14, in other embodiments, the camera 60 may be fixedly connected to the second portion 14 and collect images through the second portion 14. Specifically, in the embodiments, the second portion 14 may define a storage space 140, and the camera 60 is disposed in the storage space 140. Light can pass through the second portion 14 to be received by the camera 60 to enable the camera 60 to perform image capture through the second portion 60 . When the second portion 14 moves relative to the first portion 12, the camera 60 will follow the second portion 14 to move. In this way, the size of the display region 301 of the flexible display screen assembly 30 may be adjusted without affecting the photographing and recording functions of the camera 60, such that the user can conveniently take pictures under any circumstances.

In the embodiments, the second portion 14 may further include a bottom plate 146, and the bottom plate 146 and the second top plate 142 are disposed oppositely and define a receiving cavity 140. That is, the camera 60 may be disposed in receiving cavity 140 between the second top plate 142 and the bottom plate 146. The camera 30 may perform image capture through the bottom plate 146 of the second portion 14. Of course, it is understandable that the camera 60 may be only partially disposed in the storage cavity 140, as long as the normal shooting and photographing functions of the camera 60 can be realized, and the details are not limited here.

Further, in the embodiments, in order to enable the camera 60 to take pictures and shoot normally, the bottom plate 146 may define a through hole facing the camera 60 or the bottom plate 146 includes a light-transmitting region facing the camera 60. The camera 60 may capture images by being exposed from the through hole or through the light-transmitting region, i.e., light can pass through the through hole or through the light-transmitting region to be received by the camera 60. The light-transmitting region may be made of a light-transmitting material such as glass.

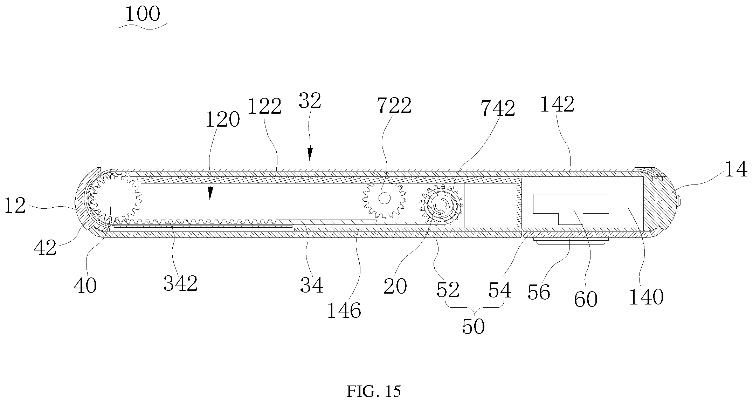

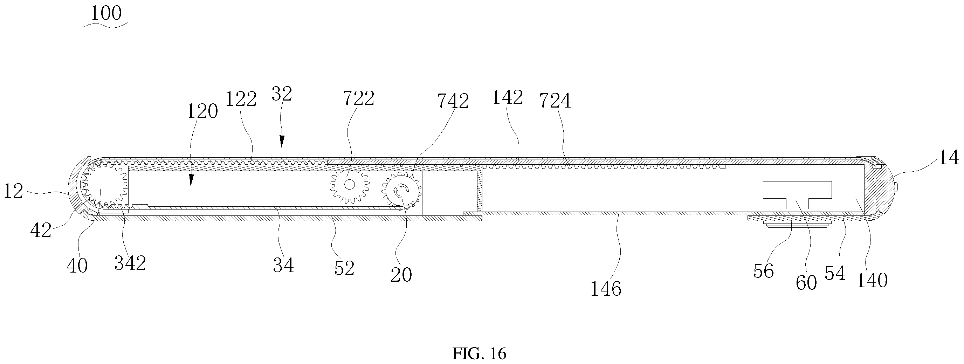

In addition, referring to FIGS. 15 and 16, in the embodiments, the cover 50 may include a first connecting portion 52 and a second connecting portion 54. The first connecting portion 52 is fixedly connected to the bottom of the first portion 12 and closes the accommodating space 120, and the second connection 54 is fixedly connected to the bottom of the second portion 14. The camera 60 may collect images through the second connecting portion 54. That is, the second connecting portion 54 is fixedly connected to the first portion 12, and the second connecting portion 54 is fixedly connected to the second portion 14. The second connecting portion 54 can move relative to the first connecting portion 52, and the camera 60 can follow the second portion 14 to move.

Specifically, the second connecting portion 52 may be fixedly or detachably connected to the bottom of the bottom plate 146, and the second connecting portion 52 includes a light-transmitting portion 56 facing the through hole or the light-transmitting region. That is, the camera 60, the through hole (or the light-transmitting region), and the light-transmitting portion 56 correspond to each other. In this way, the camera 60 may receive light through the through hole (or the light-transmitting region) and the light-transmitting portion 56 for image capture.

Referring to FIGS. 13 and 15, when the electronic device 100 is in the narrow screen mode, that is, when the first portion 12 and the second portion 14 move towards the limit position, the first connecting portion 52 and the second connecting portion 54 are joined together to form the cover 50 of the electronic device 100. Referring to FIGS. 14 and 16, when the second portion 14 moves away from the first portion 12, the second connecting portion 54 is separated from the second connecting portion 52.

Specifically, referring to FIGS. 13 and 14, in the embodiments, an arc-shaped concave portion 542 is formed on the first connecting portion 52, and a convex portion 522 that matches the concave portion 542 is formed on the second connecting portion 54. The convex portion 522 is also arc-shaped. When the electronic device 100 is in the narrow screen mode (as shown in FIGS. 13 and 15), the concave portion 542 and the convex portion 522 are joined together to realize the splicing of the first connecting portion 52 and the second connecting portion 54. It can be understood that the first connecting portion 52 and the second connecting portion 54 may be made into other shapes. For example, both of them are rectangular, and the two may be directly joined to form the cover 50. For another example, one of the two may be formed with regularly arranged protrusions, and the other may define grooves corresponding to the protrusions. In this way, the shape of the housing 10 may be enriched to improve the aesthetic feeling when the electronic device 100 is in the expanded mode.

Further, in some embodiments, the first connecting portion 52 and the second connecting portion 54 may be designed with two different color effects, which may enrich the appearance effect of the electronic device 100.

Referring to FIGS. 3, 5 and 7, in the embodiments, the driving mechanism 70 may be arranged in the accommodating space 120 of the first portion 12, and the driving mechanism 70 is connected to the second portion 14. The driving mechanism 70 is configured to drive the second portion 14 to move away from the first portion 12 to drive the flexible display screen assembly 30 to stretch.

In addition, referring to FIGS. 5 and 7, in the embodiments, the driving mechanism 70 may be connected to the reel 20. When the driving mechanism 70 drives the second portion 14 to move away from the first portion 12, the driving mechanism 70 may further drive the reel 20 to rotate to release the flexible display screen assembly 30, thereby expanding the display portion 301 of the flexible display screen assembly 30.

Specifically, the driving mechanism 70 may include a motor 71, a first transmission structure 72, and a second transmission structure 74. The motor 71 may be fixedly arranged in the accommodating space 120 of the first portion 12. The first transmission structure 72 is connected to the second portion 14 and the motor 71. The second transmission structure 74 is connected to the first transmission structure 74 and the reel 20. The motor 71 is configured to drive the second portion 14 to move relative to the first portion 12 through the first transmission structure 72 and to drive the reel 20 to rotate through the first transmission structure 72 and the second transmission structure 74.

The first transmission structure 72 includes a first transmission gear 722 and a rack 724. The first transmission gear 722 is connected to the second transmission structure 74 and is fixed on a motor shaft 711 of the motor 71, and the rack 724 is fixedly connected to the second portion 14. The rack 724 is engaged with the first transmission gear 722. In this way, in the embodiments, a gear-rack drive is used for driving, and the structure is simple and the transmission is relatively stable and reliable.

Specifically, in the embodiments, the rack 724 may be integrally formed with the second top plate 142 of the second portion 14, that is, the rack 724 may be directly integrally formed on a lower surface of the second top plate 142, such that the rack 724 may be directly processed on the second top plate 142, which has good integrity and convenient processing. It can be understood that, in other embodiments, the rack 724 may also be formed separately from the second portion 14 and the two are fixedly connected together by welding or the like, which is not specifically limited here.

Referring to FIGS. 5 and 7 again, the second transmission structure 74 connects the reel 20 and the first transmission gear 722. The second transmission structure 74 includes a second transmission gear 742 and a third transmission gear 744. The second transmission gear 742 is fixed on the reel 20 and is arranged concentrically with the reel 20. The third transmission gear 744 is rotatably arranged on the first portion 12 and connects the second transmission gear 742 and the first transmission gear 722. That is, the third transmission gear 744 engages with the second transmission gear 742 and the first transmission gear 722, and the first transmission gear 722 and the second transmission gear 742 are disposed on opposite sides of the third transmission gear 744.

In the embodiments, the motor 71 may be configured to drive the second portion 14 to move relative to the first portion 12 through the first transmission structure 72. In addition, the motor 71 may be further configured to drive the second portion 14 to move away from the first portion 12 while driving the reel 20 to rotate through the second transmission structure 74 to release the flexible display screen assembly 30. In this way, the expansion of the flexible display screen assembly 30 and the synchronous release of the reel 20 make the movement relatively stable, and the flexible display screen assembly 30 is not prone to wrinkles.

Specifically, when the display region of the electronic device 100 is needed to be expanded, that is, the display portion 301 of the flexible display screen assembly 30 is needed to be expanded, the motor 71 may drive the first transmission gear 722 to rotate, the first transmission gear 722 drives the second portion 14 to move away relative to the first portion 12 through the rack 724, and the second portion 14 drives the flexible display screen assembly 30 to expand, that is, drives an end of the flexible display screen assembly 30 to move away from each other relative to the first portion 12. At the same time, the first transmission gear 722 may drive the third transmission gear 744 to rotate at the same time, and the third transmission gear 744 drives the reel 20 to rotate, such that the reel 20 may synchronously release the flexible display screen assembly 30, such that the display portion 301 of the flexible display screen assembly 30 is expanded.

It can be understood that when the display portion 301 of the flexible display screen assembly 30 is needed to be reduced, the motor 71 is configured to be reversed to drive the second portion 14 to move in an opposite direction to the first portion 12. In this case, the second portion 14 gradually releases the flexible display screen assembly 30. The reel 20 can also gradually reel in the flexible display screen assembly 30. It can be understood that, in the embodiments, within a unit time, a movement stroke of the second portion 14 is equal to the length of the flexible display screen assembly 30 released by the rotation of the reel 20. That is, assuming that the second portion 14 pulls an end of the flexible display screen assembly 30 to move a certain distance, the reel 20 rotates to release a length equal to the distance, so as to ensure that the flexible display screen assembly 30 may move smoothly without wrinkles.

In addition, it can also be understood that, in some embodiments, in order to ensure the smoothness of the reel 20 to wind and release the flexible display screen assembly 30, the number of the driving mechanisms 70 may be two, and the number of the reels 20 is also two. The two driving mechanisms 70 may be symmetrically arranged in the accommodating space 120 along the longitudinal direction of the electronic device 100 and connected to the second portion 14, and also connected to the two reels 20. In this way, the synchronous and smooth rotation of the two reels 20 and the smooth movement of the second portion 14 may be realized by the two identical driving mechanisms 70 synchronously driving, so as to ensure the reliability of the movement of the electronic device 100 in extending the display portion 301 of the flexible display screen assembly 30.

Further, in other embodiments, the driving mechanism 70 may further include two synchronous motors 71 arranged on the first portion 12, one of the motors 71 is configured to drive the second portion 14 to move relative to the first portion 12, and the other motor 71 is configured to drive the reel 20 to rotate. The second portion 14 and the reel 20 are each driven by a separate motor 71. In this way, the synchronous movement of the two motors 71 can also ensure the smoothness and reliability of the movement of the flexible display screen assembly 30.

Further, in the embodiments, the driving mechanism 70 drives the second portion 14 and the reel 20 by means of gear transmission and gear-rack transmission. It is understandable that in other embodiments, the driving mechanism 70 may drive the second portion 14 and the reel 20 by a combination of belt transmission and gear-rack transmission or by a combination of chain transmission and gear-rack transmission. For example, the first transmission structure 72 is adopted with gear-rack transmission, and the second transmission structure 74 may be adopted with belt transmission or chain transmission, which is not specifically limited here.

In addition, in some embodiments, the driving mechanism 70 may only include a motor arranged on the first portion 12 and a first transmission structure 72 connected to the motor. The motor can drive the second portion 14 to move relative to the first portion 12 through the first transmission structure 72. In addition, the electronic device 100 may further include a recovery mechanism 80 connected to the reel 20. The recovery mechanism 80 is configured to apply a force to the flexible display screen assembly 30 through the reel 20 such that the flexible display screen 32 maintains a tendency to be wound on the reel 20.

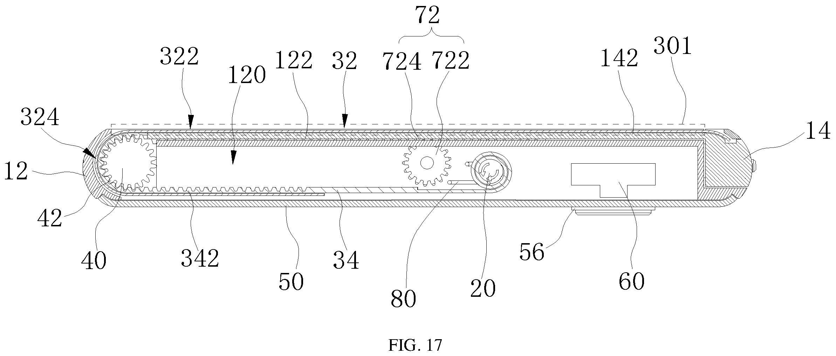

In addition, referring to FIG. 17, in some embodiments, the driving mechanism 70 may further include a motor arranged on the first portion 12 and a first transmission structure 72 connected to the motor. The motor can drive the portion 14 to move relative to the first portion 12 through the first transmission structure 72, and the second transmission structure 74 may be omitted.

Further, referring to FIGS. 17 to 20, in some embodiments, the electronic device 100 may further include a recovery mechanism 80, and the recovery mechanism 80 may also be disposed in the accommodating space 120. The recovery mechanism 80 is connected to the reel 20, and the recovery mechanism 20 is configured to apply a restoring force to the flexible display screen 30 such that the flexible display screen 30 maintains a tendency to be wound on the reel 20.

Specifically, the recovery mechanism 80 applies a restoring force to the reel 20, and the reel 20 keeps the flexible display screen 30 wound on the reel 20 under the action of the restoring force. That is, when the second portion 14 moves relative to the first portion 12 without external force, the restoring force of the recovery mechanism 80 will cause the reel 20 to rotate, such that an end of the flexible display screen 30 is wound on the reel 20. In this case, the first portion 12 and the second portion 14 are completely fitted together, and the electronic device 100 is in the narrow screen mode.

When the second portion 14 is subjected to an external force and the external force (for example, the force applied by the driving mechanism 70 to the second portion 14) is greater than or equal to the restoring force of the recovery mechanism 80, the second portion 14 moves away from the first portion 12. The reel 20 is driven to rotate against the restoring force to release the flexible display screen 30, thereby expanding the display portion 301 of the flexible display screen 30.

It is understandable that due to the existence of the recovery mechanism 80, in the process of expanding the display portion 301 of the flexible display screen 32, the recovery mechanism 80 always applies tension to the flexible display screen 30, such that the flexible display screen can be retracted and expanded in a balanced manner, and the flexible display screen 30 may be kept flat consistently.

It can also be understood that, in other embodiments, when the electronic device 100 includes the recovery mechanism 80, the driving mechanism 70 may also include the motor, the first transmission structure 72 and the second transmission structure 74 in the foregoing embodiments. The first transmission structure 72 is connected to the second portion 12 of the motor, and the second transmission structure 74 is connected to the first transmission structure 72 and the reel 20. In the embodiments, when the display region 301 is needed to be reduced, the motor may not work. Instead, the restoring force of the recovery mechanism 80 may drive the reel 20 to reverse to retract the flexible display screen 30 and drive the second portion 14 to move in an opposite direction relative to the first portion 12, that is, move closer to the first portion 12.

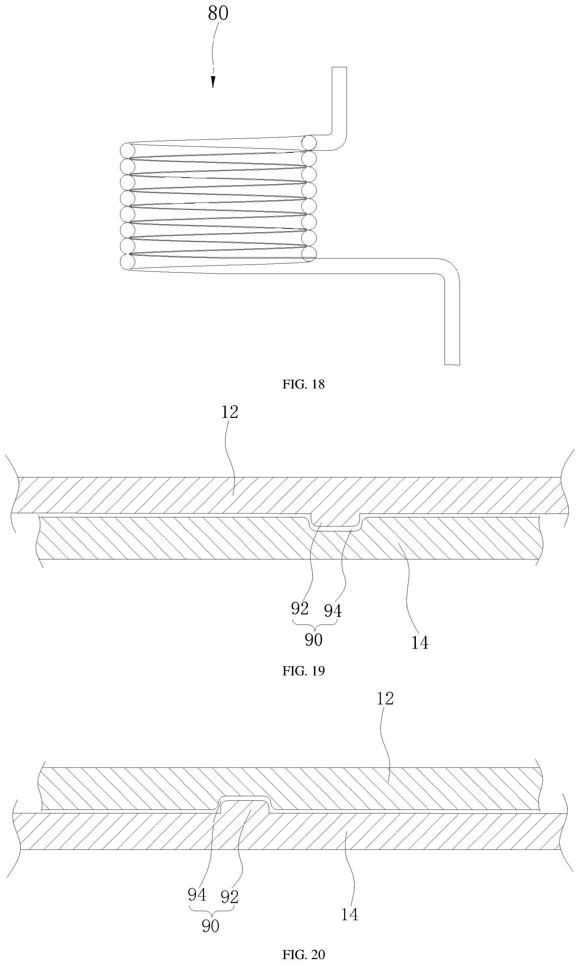

Further, referring to FIG. 18, the recovery mechanism 80 may include an elastic element connected to the reel 20 and configured to apply a restoring force to the reel 20. The elastic element may be a spring, such as a torsion spring as shown in FIG. 18. Of course, the elastic element may also be an element with elastic restoring force such as rubber, which is not specifically limited here.

Further, referring to FIG. 19, in some embodiments, the electronic device 100 may further include a snap-in structure 90 disposed on the housing 10 and configured to limit the rotation of the reel 20 when the second portion 14 moves to a predetermined position relative to the first portion 12. That is, when the second portion 14 moves to the predetermined position relative to the first portion 12, the snap-in structure 90 may prevent the second portion 14 and the flexible display screen 30 from retracting under the action of the restoring force of the recovery mechanism 80.

Specifically, referring to FIG. 19, in the embodiments, the snap-in structure 90 may include a clamping block 92 formed in the first portion 12 and a clamping slot 94 defined on the second portion 14. When the second portion 14 moves to the predetermined position relative to the first portion 12, the clamping block 92 is locked in the clamping slot 94. In this way, even if the external force on the second portion 14 is removed, the second portion 14 and the flexible display screen 30 will not retract under the action of the restoring force of the recovery mechanism 80 due to the engagement of the clamping block 92 and the clamping slot 94, thereby ensuring that the electronic device 100 is in the extended mode.

It should be noted that the foregoing "predetermined position" may be a relative position of the second portion 14 and the first portion 12 when the second portion 14 moves away from the first portion 12 to the limit position, or any position before the limit position.

It can be understood that, referring to FIG. 20, in other embodiments, a clamping slot 94 may be defined on the first portion 12, and a clamping block 92 may be formed in the second portion 14. In addition, in some embodiments, it is also possible to form a clamping block in the first portion 12 and define a clamping slot on the reel 20. When the second portion 14 moves to the predetermined position, the clamping block and the clamping slot are engaged. In this case, the clamping block and the clamping slot may be engaged by manual pressing or electric drive, such that the reel will not rotate relative to the first portion, and further the second portion 14 and the flexible display screen 30 may not be retracted under the action of the recovery mechanism 80. Of course, in other embodiments, the snap-in structure 90 may further include a clamping member, and the recovery mechanism 80 may include a torsion spring. When the second portion 14 moves to the predetermined position, the clamping member may clamp the torsion spring to counteract the restoring force of the torsion spring. In addition, it can also be understood that, in some embodiments, the snap-in structure 90 may include an elastic assembly arranged on the first portion 12 and a first buckle portion formed on the second portion 14. The elastic assembly may include a pressing member, a spring, and a second buckle portion. The pressing member is arranged in the first portion 12, and the spring connects the pressing member and the second buckle portion. The pressing member may be configured to drive the second buckle portion to move to be buckled with the first buckle portion through the spring under the action of external force, so as to define the relative position of the first portion 12 and the second portion 14. In this way, when the second portion 14 moves to the predetermined position, the user may press the pressing member to make the first buckle portion and the second buckle portion engage, thereby preventing the second portion 14 from being retracted under the action of the restoring force of the recovery mechanism 80 to keep the electronic device 100 in the expanded mode. It is understandable that when the pressing member is pressed again, the first buckle portion and the second buckle portion may be away from each other, such that the second portion 14 and the flexible display screen 30 may be retracted under the action of the recovery mechanism 80, such that the electronic device 100 returns from the extended mode to the narrow screen mode.

Hereinafter, the working principle of the electronic device 100 will be introduced.

Referring to FIG. 4 to FIG. 7, as described above, the electronic device 100 can switch between the narrow screen mode and the extended mode. In a state shown in FIGS. 4 and 5, the electronic device 100 is in the narrow screen mode; and in a state shown in FIGS. 6 and 7, the electronic device 100 is in the extended mode. In the narrow screen mode, the first portion 12 and the second portion 14 cooperate with each other to form the housing 10. An end of the flexible display screen assembly 30 is wound on the reel 20, and the other end is connected to the second portion 14. In this case, only a small portion of the flexible display screen assembly 30 is exposed from the housing 10, and the display portion 301 is narrow, which is convenient for the user to carry.

When the user needs a larger display portion 301, the driving mechanism 70 may be activated to drive the second portion 14 to move away from the first portion 12. In this case, the second portion 14 drives an end of the flexible display screen 32 to move, and the driving mechanism 70 also drives the reel 20 to rotate and release the flexible display screen assembly 30, such that a portion of the flexible display screen assembly 30 hidden in the housing 10 is gradually pulled out by the second portion 14 (that is, moving from the state shown in FIG. 4 to the state shown in FIG. 6), so as to expand the display portion 301 of the flexible display screen assembly 30. In this case, the region of the display portion 301 is relatively large, which can facilitate the user's operation and improve the user's operating experience.

When it is needed to switch from the extended mode to the narrow screen mode, it is only necessary to reverse the motor 71 of the driving mechanism 70 to drive the second portion 14 to move closer to the first portion 12, thereby releasing the flexible display screen assembly 30. In this case, the reel 20 is also correspondingly reversed, and the flexible display screen assembly 30 is rolled up synchronously. When the first portion 12 and the second portion 14 move in opposite directions to the limit position, the motor 71 stops running, and the electronic device 100 returns to the narrow screen mode.

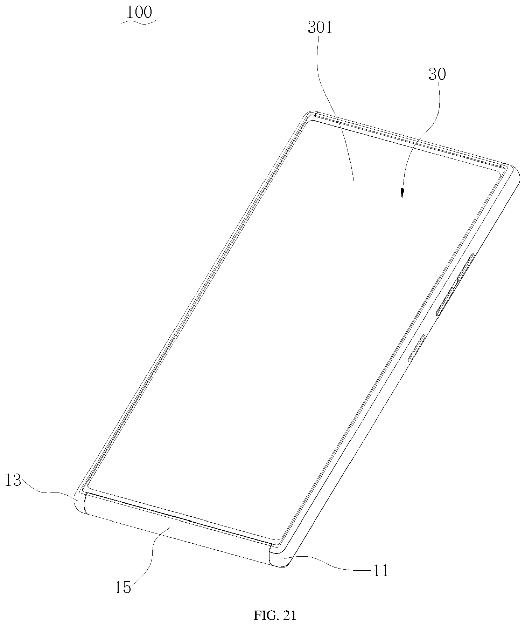

Referring to FIGS. 21 to 26, which illustrate another embodiment of the electronic device 100 of the present disclosure. Specifically, the electronic device 100 includes a housing 10, a reel 20, a flexible display screen assembly 30, a limiting member 40, a cover 50, a camera 60, and a driving mechanism. The reel 20, the flexible display screen assembly 30, the limiting member 40, the cover 50, the camera 60 and the driving mechanism are all arranged in the housing 10. The driving mechanism is not shown in FIGS. 21 to 26.

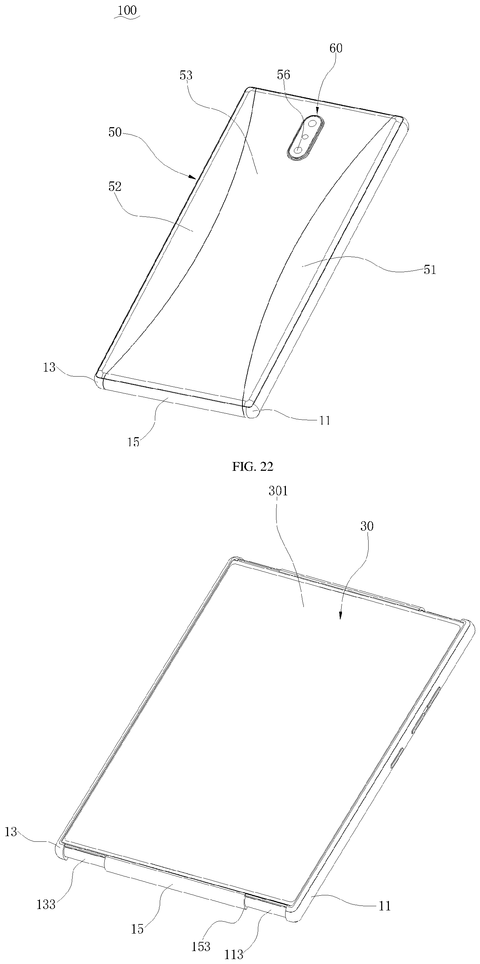

Referring to FIGS. 22 to 24, in the embodiment, the housing 10 includes a first portion 11, a second portion 13, and a third portion 15. The first portion 11 is disposed on a side of the third portion 15, and the second portion 13 is disposed on the other side of the third portion 15 opposite to the first portion 11. Both the first portion 11 and the second portion 13 can move relative to the third portion 15.

Specifically, in the embodiments, the first portion 11 and the third portion 15 are slidably connected, and the second portion 13 is slidably connected to the third portion 15. The structures of the first portion 11 and the second portion 13 are basically the same and they are arranged symmetrically on both sides of the third portion 15.

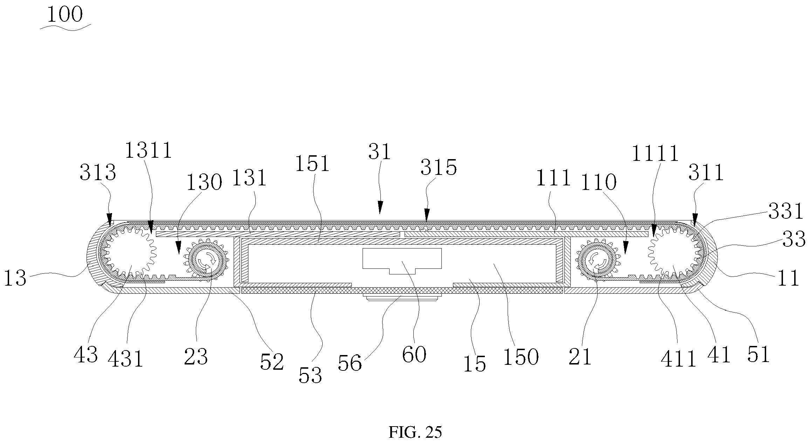

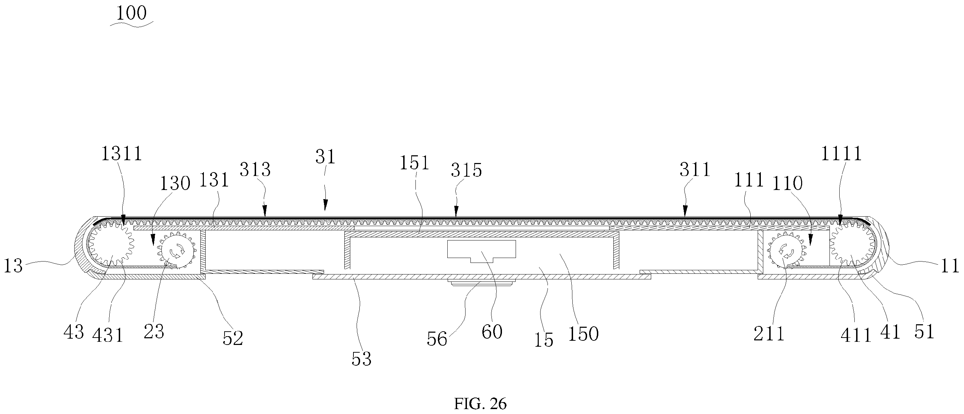

Further referring to FIGS. 25 and 26, the first portion 11 is substantially a hollow rectangular body and defines a first storage space 110, and a bottom of the first storage space 110 is open. The first storage space 110 may be configured to store components such as the reel 20, the limiting member 40, and the driving mechanism. The first portion 11 includes a first sliding portion 113 and a first top plate 111. The first sliding portion 113 is connected to symmetrical sides of the first top plate 111 along a longitudinal direction, and the first sliding portion 113 is configured to cooperate with the third portion 15 to realize the sliding connection between the first portion 11 and the third portion 15.

The first top plate 111 defines a first opening 1111 communicating with the first storage space 110. Specifically, the first opening 1111 may be defined along the longitudinal direction of the electronic device 100, and the first opening 1111 is configured for an end of the flexible display screen assembly 30 to pass through, such that the end of the flexible display screen assembly 30 is connected to the reel 20.

Referring to FIGS. 25 and 26, in the embodiments, the second portion 13 includes a second sliding portion 133 and a second top plate 131. The second sliding portion 133 is connected to symmetrical sides of the second top plate 131 along the longitudinal direction, and the second sliding portion 133 is configured to cooperate with the third portion 15 to realize the sliding connection of the second portion 13 and the third portion 15.

The second top plate 131 defines a second opening 1311 communicating with a second storage space 130. Specifically, the second opening 1311 may be defined along the longitudinal direction of the electronic device 100, and the second opening 1113 is configured for the other end of the flexible display screen assembly 30 to pass through, such that the other end of the flexible display screen assembly 30 is connected to the reel 20.

Referring to FIGS. 25 and 26, the third portion 15 is substantially a hollow rectangular shape and defines an accommodating space 150, and a bottom of the accommodating space 150 is open. The cover 50 covers the bottom of the accommodating space 150. The accommodating space 150 may be configured to place components such as the camera 60 and a main board 101. Of course, the accommodating space 150 may be further configured to stack other electrical components of the electronic device 100, such as a sub-board 103, a processor, a sensor, a battery 102, etc.

The third portion 15 further defines a sliding groove 153 configured to cooperate with the sliding portions of the first portion 11 and the second portion 13, such that both the first portion 11 and the second portion 13 can slide relative to the third portion 15. The third portion 15 includes a third top plate 151 disposed under the first top plate 111 and the second top plate 131 and substantially attached to the first top plate 111 and the second top plate 131. Specifically, the structures of the first portion 11 and the second portion 13 are basically the same, the thickness of the first top plate 111 and the second top plate 131 are also the same, and an upper surface of the third top plate 151 is substantially attached to a lower surface of the first top plate 111 and a lower surface of the second top plate 131. It should be noted that "attachment" herein may be understood as contact between two elements but does not affect the sliding between them, or may be understood as a gap between the two is within an assembly error.

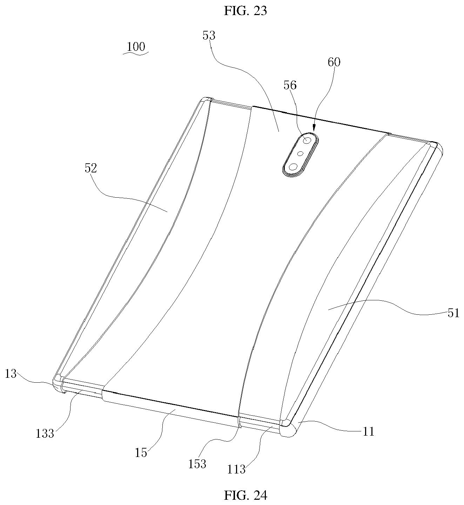

In the embodiments, the first portion 11 may slide relative to the third portion 15 to be away from or close to a side of the third portion 15, and the second portion 13 may also slide relative to the third portion 15 to be away from or close to the other side of the third portion 15. Referring to FIGS. 22 and 26, in the embodiment, "the first portion 11 and the second portion 13 move away from each other" may be understood as the first portion 11 sliding away from the third portion 15 and the sliding direction being away from the third portion 15, and the second portion 13 sliding away from the other side of the third portion 15 and the sliding direction being away from the third portion 15, for example, moving from the state shown in FIGS. 21 and 25 to the state shown in FIGS. 23 and 26. In addition, in the embodiments, the first portion 11 and the second portion 13 may also move towards each other. In this case, it can be understood that the first portion 11 and the second portion 1 each approaches a corresponding side of the third portion 15 and slides in the direction toward the third portion 15, for example, moving from the state shown in FIGS. 23 and 26 to the state shown in FIGS. 21 and 25.

It is understandable that in other embodiments, "the first portion 11 and the second portion 13 move away from each other" may also be understood as the first portion 11 being stationary relative to the third portion 15, and the second portion 13 sliding far away from the third portion 15; or, the first portion 11 sliding far away from the third portion 15, and the second portion 13 being stationary relative to the third portion 15.

Referring to FIG. 17, in the embodiments, when the first portion 11 and the second portion 13 move to a limit position relative to the third portion 15 respectively (that is, the first portion 11 and the second portion 13 move close to each other when the first portion 11, the second portion 13, and the third portion 15 fit together), the first portion 11, the second portion 13, and the third portion 15 form the substantially rectangular housing 10 as a whole.

Referring to FIGS. 25 and 26, in the embodiments, the reel 20 includes a first reel 21 and a second reel 23. The first reel 21 is rotatably disposed in the first portion 11 and is disposed in the first storage space 110, that is, the first reel 21 may be arranged in the first storage space 110 and rotate relative to the first portion 11. The first reel 21 is connected to an end of the flexible display screen assembly 30 to reel in or release the flexible display screen assembly 30.

The structure of the second reel 23 and the first reel 21 is basically the same. The second reel 23 and the first reel 21 are arranged symmetrically about the center of the housing 10, and the second reel 23 is rotatably arranged in the second portion 13 and disposed in the second storage space 130. That is, the second reel 23 may be arranged in the second storage space 130 and rotate relative to the second portion 13. The second reel 23 is connected to the other end of the flexible display screen assembly 30 to reel in or release the flexible display screen assembly 30. That is, the first reel 21 and the second reel 23 are connected to two ends of the flexible display screen assembly 30. The flexible display screen assembly 30 is arranged symmetrically with respect to the center of the housing 10, that is, a portion of the flexible display screen assembly 30 wound on the first reel 21 and a portion wound on the second reel 23 are symmetrical.

It can be understood that the rotation of the first reel 21 on the first portion 11 may mean that the first reel 21 is directly arranged on the first portion 11, or mean that the first reel 21 is arranged on the first portion 11 through other medium. The rotation of the second reel 23 on the second portion 13 may mean that the second reel 23 is directly arranged on the second portion 13, or mean that the second reel 23 is arranged on the second portion 13 through other medium.

Referring to FIGS. 25 and 26, both ends of the flexible display screen assembly 30 are connected to the first reel 21 and the second reel 23. Specifically, an end of the flexible display screen assembly 30 passes through the first opening 1111 of the first portion 11 and is connected to the first reel 21, and the other end passes through the second opening 1311 of the second portion 13 and is connected to the second reel 23. When the first portion 11 and the second portion 13 move away from each other, that is, when both the first portion 11 and the second portion 13 move far away from the third portion 15, the first reel 21 and the second reel 23 may rotate at the same time to gradually release the flexible display screen assembly 30, thereby expanding the display portion 301 of the flexible display screen assembly 30.

In this way, when the first portion 11 and the second portion 13 move away from each other, the first reel 21 and the second reel 23 may rotate to release the flexible display screen assembly 30, thereby expanding the display portion 301 of the flexible display screen assembly 30. In this way, the size of the screen display region of the electronic device 100 may be adjusted freely, and the display portion 301 of the flexible display screen assembly 30 may be expanded when a large screen is needed to improve the user's operating experience. In addition, when a large screen in not needed, the display portion 301 may not be expanded such that the size of the whole machine is small for convenient carrying.

It is understandable that in other embodiments, when "the first portion 11 and the second portion 13 move away from each other" is understood as the first portion 11 being stationary relative to the third portion 15, and the second portion 13 sliding away from the third portion 15, only the first reel 21 rotates to release an end of the flexible display screen assembly 30 to expand the display portion 301. In addition, when "the first portion 11 and the second portion 13 move away from each other" is understood as the first portion 11 sliding away from the third portion 15, and the second portion 13 being stationary relative to the third portion 15, only the second reel 23 rotates to release an end of the flexible display screen assembly 30 to expand the display portion 301.

In addition, it can be understood that, in the embodiments: in a case where the first portion 11, the second portion 13, and the third portion 15 are close to and fully fitted, the display portion 301 of the flexible display screen assembly 30 is not expanded, and the electronic device 100 is in a narrow screen mode (for example, the state shown in FIGS. 21 and 25). In this case, an end of the flexible display screen assembly 30 is wound on the first reel 21, the other end is wound on the second reel 23, and a portion (i.e., the display portion 301) exposed from the housing 10 is configured for display.

When the display portion 301 of the flexible display screen assembly 30 is needed to be expanded, the first portion 11 and the second portion 13 move away from each other, such that the first portion 11 and the second portion 13 are far away from each other, and the first reel 21 and the second reel 23 are also far away from each other. Since the two ends of the flexible display screen assembly 30 are connected to the first reel 21 and the second reel 23, in the process of moving away, the first reel 21 and the second reel 23 will rotate at the same time to release both ends of the flexible display assembly 30, thereby expanding the display portion 301 of the flexible display screen assembly 30. In this case, the electronic device 100 is in an expanded mode (for example, the state shown in FIGS. 23 and 26).

It can be understood that there is a limit position when the second portion 13 and the first portion 11 move away from each other, that is, a limit position where the second portion 13 and the first portion 11 are far away from the third portion 15. When in the limit position, the display region of the electronic device 100 is the largest, that is, the display portion 301 of the flexible display screen assembly 30 is the largest (as shown in FIG. 23). When the first portion 11, the second portion 13, and the third portion 15 are close and fully fitted together, the display region of the electronic device 100 is the smallest, that is, the display portion 301 of the flexible display screen assembly 30 is the smallest (as shown in FIG. 21).

It should be noted that in the embodiments, the "display portion 301 of the flexible display screen assembly 30 "may also be understood as a portion exposed from the housing 10.

Specifically, referring to FIG. 25 and FIG. 26, in the embodiments, the flexible display screen assembly 30 includes a flexible display screen 31 and a flexible support 33. The flexible display screen 31 and the flexible support 33 are stacked and fixedly connected.

The flexible display screen 31 includes a first region 311, a second region 313 connected to an end of the first region 311, and a third region 315 connected to the other end of the first region 311. The first region 311 is disposed above the first top plate 111 and the second top plate 131 and has a size similar to the area of the first top plate 111 and the area of the second top plate 131. At least a portion of the second region 313 is disposed in the first storage space 110 of the first portion 11 and connected to the flexible support 33.

At least a portion of the third region 315 is disposed in the second storage space 130 of the second portion 13 and connected to the flexible support 33. In the embodiments, expanding the display portion 301 of the flexible display screen assembly 30 may be understood as pulling out the second region 313 disposed in the first storage space 110 or the third region 315 disposed in the second storage space 130 or pulling out the two at the same time to be exposed from above the housing 10, thereby expanding the display portion 301 of the flexible display screen assembly 30 for display, that is, expanding the display region of the electronic device 100.

The flexible support 33 is arranged at a bottom of the flexible display screen 31 and covers a lower surface of the flexible display screen 31. The flexible support 33 may be fixedly connected to the flexible display screen 31 through optically clear adhesive (OCA). In an example shown in FIGS. 25 and 26, both ends of the flexible support 33 protrude beyond the flexible display screen 31, and excess portions are connected to the first reel 21 and the second reel 23. Referring to FIG. 25, when the electronic device 100 is in the narrow screen mode, an end of the flexible support 33 is wound on the first reel 21, and the other end is wound on the second reel 23. The flexible display 31 is substantially a racetrack in shape. Electrical components such as the main board 101, the sub-board 103, the sensor, and the battery 102 of the electronic device 100 may be received in a space enclosed by the flexible display screen assembly 30. In this way, the arrangement of the flexible display screen assembly 30 does not affect the placement of electrical components such as the main board 101 and the battery 102, which effectively improves space utilization, and facilitates the stacking and placement of electrical components such as the main board 101 and the battery 102.

In addition, when the electronic device 100 is in the narrow screen mode, the first reel 21 and the second reel 23 only reel the flexible support 33, and the flexible display screen 31 is not directly reeled in by the first reel 21 and the second reel 23, such that the service life of the flexible display screen 31 is increased. Of course, it can be understood that, in other embodiments, the flexible display screen 31 may also be connected to the first reel 21 and the second reel 23 after completely facing the flexible support 33.

Referring to FIGS. 25 and 26, in the embodiments, when the first portion 11 and the second portion 13 move away from each other, the flexible support 33 abuts against the first portion 11 and the second portion 13 to keep the flexible display screen 31 flat. When the first portion 11 and the second portion 13 are away from each other, the flexible support 33 is attached to the first portion 11 and the second portion 13. In this way, the flexible support 33 may play a role in increasing the strength of the flexible display screen 31, ensuring that the flexible display screen 31 may be flat and stable during movement, and also preventing damage to the flexible display screen 31 under the action of larger forces.

In addition, a bottom of the flexible support 33 may be formed with a first tooth portion 331, the first tooth portion 331 is configured to engage with the limiting member 40 such that the limiting member 40 can support the flexible display screen assembly 30 and keep the flexible display screen assembly 30 to move smoothly.

Referring to FIGS. 25 and 26 again, the limiting member 40 includes a first limiting member 41 and a second limiting member 43. The first limiting member 41 is rotatably arranged in the first portion 11 and disposed in the first storage space 110. The first limiting member 41 is cylindrical. A second tooth portion 411 is formed on a circumference of the first limiting member 41.

The second limiting member 43 is rotatably arranged in the second portion 13, in the second storage space 130, and symmetrical to the first limiting member 41. The second limiting member 43 is also cylindrical, and a third tooth portion 431 is formed on a circumference of the second limiting member 43.

Both the second tooth portion 411 and the third tooth portion 431 are configured to engage with the first tooth portion 331 on the flexible support 33 to support the flexible display screen assembly 30 and guide the expansion of the flexible display screen assembly 30.

In this way, the first limiting member 41 and the second limiting member 43 may limit the shape of the flexible display screen assembly 30, such that the display portion 301 of the flexible display screen assembly 30 may be in a flat state, that is, the flexible display screen assembly 30 may be maintained in a racetrack in shape. In addition, the engagement of the first limiting member 41 and the second limiting member 43 with the flexible supporting member 33 may not only support the flexible display screen assembly 30, but also guide when the first reel 21 and the second reel 23 release the flexible display screen assembly 30, to ensure that the flexible display screen assembly 30 unfolds steadily.

Specifically, in the embodiments, the first limiting member 41 is a guide gear, the first limiting member 41 is disposed at a position facing the first opening 1111, and an end of the flexible supporting member 33 is wound around the second limiting member 43. The first tooth portion 331 on the flexible support 33 engages with the second tooth portion 411. The second limiting member 43 may be two guide gears. The second limiting member 43 is arranged at a position facing the second opening 1311. The other end of the flexible supporting member 33 is wound around the second limiting member 43. The first tooth portion 331 on the flexible support 33 engages with the third tooth portion 431. That is, an end of the flexible display screen assembly 30 passes through the first opening 1111, is wound on the first limiting member 41, and is connected to the first reel 21. The other end of the flexible display screen assembly 30 passes through the second opening 1311, is wound on the second limiting member 42, and is connected to the second reel 23. When the first portion 11 and the second portion 13 move far away from each other, the first stopping member 41 and the second stopping member 43 gradually rotate under the drive of the flexible support 33, and the first reel 21 and the second reel 23 gradually release the flexible support 33, such that more portions of the flexible display screen 31 may be exposed from the housing 10 to expand the display portion 301. In addition, referring to FIG. 25, in the embodiments, the structures of the first limiting member 41 and the second limiting member 43 are basically the same.

It can be understood that, in other embodiments, the first limiting member 41 and the second limiting member 43 may not be formed with tooth portions, but are directly optical shafts or rollers, and the flexible display screen assembly 30 is directly wound on the rollers. In this way, the first limiting member 41 and the second limiting member 43 can also support and guide the flexible display screen 31.

Referring to FIGS. 25 and 26, in the embodiments, the camera 60 is disposed in the accommodating space 150 of the third portion 15, and the cover 50 is disposed on the bottom of the third portion 15 to close the accommodating space 150. That is, in the embodiments, when the second portion 13 moves relative to the first portion 11, the camera 60 will not follow to move. When the electronic device 100 is in the extended mode, the camera 60 is disposed in the middle of the entire flexible display 31.

The cover 50 is detachably connected to the first portion 11, such that the cover 50 may be easily removed to repair and replace electrical components such as the main board 101, the battery 102 or the sensor stacked in the accommodating space 150.

In addition, the cover 50 may be arranged with a light-transmitting portion 56 facing the camera 60, and the camera 60 may perform shooting through the light-transmitting portion 56. In this way, the camera 60 may be protected without affecting the shooting effect of the camera 60, thereby preventing the camera 60 from being directly exposed outside the housing 10 and causing accidental scratches on the camera 60.

Referring to FIGS. 22, 24 and 25, in some embodiments, the cover 50 includes a first connecting portion 51, a second connecting portion 53, and a third connecting portion 55. The first connecting portion 51 is fixedly or detachably connected to the first portion 11 and closes the first storage space 110. The second connecting portion 53 is fixedly or detachably connected to the second portion 13 and closes the second storage space 130. The third connecting portion 55 is fixedly or detachably connected to the third portion 15 and closes the accommodating space 150.

Referring to FIG. 22, when the electronic device 100 is in the narrow screen mode, that is, when the first portion 11 and the second portion 13 move in opposite directions to the limit position and are fully fitted with the third portion 15, the first connecting portion 51, the second connecting portion 53 and the third connecting portion 55 are joined together to form the cover 50 of the electronic device 100. Specifically, referring to FIGS. 22, 24, and 25, in some embodiments, the first connecting portion 51 and the second connecting portion 53 are symmetrical with respect to the third connecting portion 55. The first connecting portion 51 and the second connecting portion 53 are each formed with a convex arc. Each side of the third connecting portion 55 is formed with a concave arc matching a corresponding convex arc. When the electronic device 100 is in the narrow screen mode, the concave arc and the convex arc are joined together to realize the splicing of the first connecting portion 51 and the third connecting portion 55 and the splicing of the second connecting portion 53 and the third connecting portion 55. It is understandable that the first connecting portion 51, the second connecting portion 53, and the third plate may be made into other shapes. For example, all three of them are rectangular, and the three may be directly joined to form the cover 50. For another example, regularly arranged protrusions may be formed on symmetrical sides of the third connecting portion 55, and grooves corresponding to the protrusions may be defined on the first connecting portion 51 and the second connecting portion 53. In this way, the shape of the housing 10 may be enriched to improve the aesthetic feeling when the electronic device 100 is in the expanded mode.

Further, in some embodiments, the first connecting portion 51, the second connecting portion 53, and the third connecting portion 55 may be designed with a variety of different color effects, which may enrich the appearance effect of the electronic device 100.

In the embodiments, the number of driving mechanisms (not shown) may be two, and the two driving mechanisms may be disposed in the first storage space 110 and the second storage space 130. The driving mechanism arranged in the first storage space 110 may be connected to the first top plate 111 and the first reel 21 and be configured to drive the first reel 21 to rotate while driving the first portion 11 to move away from the third portion 15 to release an end of the flexible display screen assembly 30.

The driving mechanism arranged in the second storage space 130 may be connected to the second top plate 131 and the second reel 23 and be configured to drive the second reel 23 to rotate while driving the second portion 13 to move away from the third portion 15 to release the other end of the flexible display screen assembly 30.

Specifically, in the embodiments, the specific structure of the driving mechanism may be basically the same as the structure of the driving mechanism 70 in the foregoing embodiments, for example, as shown in FIG. 5 and FIG. 7. To avoid redundancy, detailed description is omitted here.

In the embodiments, when the display region of the electronic device 100 is needed to be expanded, that is, the display portion 301 of the flexible display screen assembly 30 is needed to be expanded, the first portion 11 may be driven by the driving mechanism arranged in the first storage space 110 to move away from the third portion 15 and the second portion 13. At the same time, the driving mechanism also drives the first reel 21 to rotate, such that the first reel 21 can gradually release the flexible display screen assembly 30 to expand the display portion 301 of the flexible display screen assembly 30 (for example, moving from the state shown in FIG. 25 to the state shown in FIG. 26).

When the flexible display flat display portion 301 is needed to be reduced, the motor 71 of the driving mechanism is needed to be reversed to drive the first portion 11 to move in an opposite direction relative to the third portion 15. In this case, the first reel 21 is also reversed under the drive of the driving mechanism to gradually retract an end of the flexible display screen assembly 30 (for example, moving from the state shown in FIG. 26 to the state shown in FIG. 25).

It can be understood that, in the embodiments, within a unit time, a movement stroke of the first portion 11 is equal to the length of the flexible display screen assembly 30 released by the rotation of the first reel 21. That is, assuming that the first portion 11 moves a certain distance, the first reel 21 rotates to release a length equal to the distance, so as to ensure that the flexible display screen assembly 30 may move smoothly without wrinkles.

In a similar manner, when the display region of the electronic device 100 is needed to be expanded, the second portion 13 may be driven by the driving mechanism arranged in the second storage space 130 to move away from the third portion 15 and the first portion 11. At the same time, the driving mechanism also drives the second reel 23 to rotate, such that the second reel 23 can gradually release the flexible display screen assembly 30, to expand the display portion 301 of the flexible display screen assembly 30.

It is understandable that in the embodiments, when the display portion 301 of the flexible display screen assembly 30 is needed to be expanded, one of the two driving mechanisms may be configured to drive the first portion 11 or the second portion 13 to move in an anti-opposite direction relative to the third portion 15, so as to expand the flexible display screen assembly 30. Of course, it is also possible to simultaneously drive the first portion 11 and the second portion 13 to move away relative to the third portion 15 through the two driving mechanisms to achieve the same purpose. Preferably, in the embodiments, the two driving mechanisms are adopted to synchronously drive the first portion 11 and the second portion 13 to move relative to the third portion 15 to realize the expansion of the display portion 301 of the flexible display screen assembly 30.

Hereinafter, the working principle of the electronic device 100 will be introduced by applying the two driving mechanisms to simultaneously drive the first portion 11 and the second portion 13 to move.

Referring to FIGS. 21, 22, 25, and 26, as described above, the electronic device 100 can switch between the narrow screen mode and the extended mode. In a state shown in FIGS. 21 and 25, the electronic device 100 is in the narrow screen mode; and in a state shown in FIGS. 23 and 26, the electronic device 100 is in the extended mode. In the narrow screen mode, the first portion 11, the second portion 13, and the third portion 15 cooperate with each other to form the housing 10. An end of the flexible display screen assembly 30 is wound on the first reel 21, and the other end is wound on the second reel 23. In this case, only a small portion of the flexible display screen assembly 30 is exposed from the housing 10, and the display portion 301 is narrow, which is convenient for the user to carry.

When the user needs a larger display portion 301, the first portion 11 and the second portion 13 are respectively driven to move away relative to the third portion 15 through the two driving mechanisms, and the movement directions of the first portion 11 and the second portion 13 are opposite. In this case, the driving mechanism simultaneously drives the first reel 21 and the second reel 23 to rotate to release the flexible display screen assembly 30. In this way, the second region 313 of the flexible display screen 31 hidden in the first storage space 110 is gradually pulled out. Similarly, the third region 315 of the flexible display screen 31 hidden in the second storage space 130 is gradually pulled out. In this way, the area of the portion of the flexible display screen assembly 30 exposed from the housing 10 is large, so as to expand the display portion 301 of the flexible display screen assembly 30. In this case, the region of the display portion 301 is relatively large, which is convenient for the user to operate, improving the user's operating experience.

When it is needed to switch from the extended mode to the narrow screen mode, only the motor 71 of the driving mechanism is needed to be reversed to drive the first portion 11 and the second portion 13 to move in opposite directions relative to the third portion 15. At this time, the reel 20 is correspondingly reversed, such that the flexible display screen assembly 30 is reeled in synchronously. When the first portion 11, the second portion 13, and the third portion 15 move in opposite directions to the limit position, that is, when the three are completely fitted together, the motor 71 stops operating, and the electronic device 100 returns to the narrow screen state.

In summary, the electronic device 100 includes a housing 10, a reel 20, a flexible display screen assembly 30, and a limiting member 40. The housing 10 includes a first portion 11 and a second portion 13 capable of relatively moving. The reel 20 is rotatably arranged in the first portion 11. An end of the flexible display screen assembly 30 is fixedly connected to the second portion 13, and the other end is wound on the reel 20. The limiting member 40 is rotatably arranged in the first portion 11, a middle portion of the flexible display screen assembly 30 is wound around the limiting member 40, and the limiting member 40 is configured to limit the shape of the flexible display screen assembly 30. When the first portion 11 and the second portion 13 move away from each other, the reel 20 can rotate to release the flexible display screen assembly 30, thereby expanding the display portion 301 of the flexible display screen assembly 30.

In the related art, the size of the display region is adjusted by designing a mobile end of a scroll-type flexible screen. When the display screen is not needed or only a small screen is needed, the flexible display screen is rolled in the roll or only a small portion is disposed in the reel. When a larger screen is needed, the flexible display screen may be pulled out of the reel to adjust the size of the screen. However, this type of electronic device is prone to problems such as unstable movement of the screen or multiple bends when adjusting the size of the screen.

In the electronic device 100 of the embodiments of the present disclosure, the limiting member 40 is rotatably disposed in the first portion 11 of the housing 10, and the middle portion of the flexible display screen assembly 30 is wound on the limiting member 40. In this way, when the first portion 11 and the second portion 13 move away from each other to expand the display portion 301 of the flexible display screen assembly 30, the limiting member 40 can limit the shape of the flexible display screen assembly 30, such that the display portion 301 of the flexible display screen assembly 30 may be in a flat state. In addition, the limiting member 40 may guide when the second portion 13 drives the flexible display screen assembly 30 to move so as to maintain the smooth movement of the flexible display screen assembly 30.

The electronic device 100 in the embodiments of the present disclosure includes a housing 10, a reel 20, a flexible display screen assembly 30, and a limiting member 40. The housing 10 includes a first portion 11 and a second portion 13 capable of relatively moving. The reel 20 is rotatably arranged in the first portion 11. An end of the flexible display screen assembly 30 is fixedly connected to the second portion 13, and the other end is connected to the reel 20. The limiting member 40 is rotatably arranged in the first portion 11, the middle portion of the flexible display screen assembly 30 is wound around the limiting member 40, and the limiting member 40 is configured to limit the shape of the flexible display screen assembly 30. When the first portion 11 and the second portion 13 are in a state of being far away from each other, the display portion 301 of the flexible display screen assembly 30 is expanded.

The electronic device 100 in the embodiments of the present disclosure includes a housing 10, a flexible display screen assembly 30, and a limiting member 40. The housing 10 includes a first portion 11 and a second portion 13 capable of relatively moving. An end of the flexible display screen assembly 30 is fixedly connected to the second portion 13, and the other end is arranged in the housing 10. The limiting member 40 is rotatably arranged in the first portion 11, the middle portion of the flexible display screen assembly 30 is wound around the limiting member 40, and the limiting member 40 is configured to limit the shape of the flexible display screen assembly 30. When the first portion 11 and the second portion 13 move away from each other, a portion of the flexible display screen 30 disposed in the housing 10 at least partially protrudes from the housing 10 so as to expand the display portion 301 of the display screen 30.

In the description of this specification, reference to the terms "certain embodiments", "one embodiment", "some embodiments", "exemplary embodiments", "examples", "specific examples", or "some examples" means that a specific feature, structure, material, or characteristic described in combination with the embodiment or example is included in at least one embodiment or example of the present disclosure. In this specification, the schematic representation of the above terms does not necessarily refer to the same embodiment or example. Moreover, the described specific features, structures, materials or characteristics may be combined in an appropriate manner in any one or more embodiments or examples.

Although the embodiments of the present disclosure have been shown and described above, it can be understood that the foregoing embodiments are exemplary and should not be construed as limiting the present disclosure. Variations, modifications, replacements and variations of the above embodiments may be made by those skilled in the art within the scope of the present disclosure, which is limited by the claims and their equivalents.

## Claims

1. An electronic device, **characterized by** comprising:
a housing, comprising a first portion and a second portion that are capable of moving relatively;
a reel, rotatably arranged in the first portion;
a limiting member, rotatably arranged in the first portion; and
a flexible display screen assembly; wherein an end of the flexible display screen assembly is connected to the second portion, and the other end of the flexible display screen assembly is arranged on the reel; a middle portion of the flexible display screen assembly is wound on the limiting member; the limiting member is configured to limit a shape of the flexible display screen assembly;
wherein in condition of the first portion and the second portion performing a relative movement away from each other, the reel is capable of rotating to release the flexible display screen assembly, for expanding a display portion of the flexible display screen assembly.

2. The electronic device according to claim 1, wherein the flexible display screen assembly comprises a flexible display screen and a flexible support stacked and fixedly connected to the flexible display screen; an end of the flexible support is connected to the reel; the flexible support is connected to the limiting member; in condition of the first portion and the second portion performing the relative movement away from each other, the flexible support is capable of rotating the limiting member, and the flexible support abuts against the first portion to keep the flexible display screen flat.

3. The electronic device according to claim 2, wherein the flexible support comprises a first tooth portion, and the limiting member comprises a second tooth portion engaging with the first tooth portion.

4. The electronic device according to claim 1, wherein the limiting member comprises a rotating shaft, and a middle portion of the flexible display screen assembly is wound on the rotating shaft; in condition of the first portion and the second portion performing the relative movement away from each other, the flexible display screen assembly is configured to drive the rotating shaft to rotate by a frictional resistance with the rotating shaft.

5. The electronic device according to claim 1, wherein in condition of the first portion and the second portion performing a relative movement closer to each other, the reel is capable of rotating to reel in the flexible display screen assembly, for reducing the display portion of the flexible display screen assembly;
during an expansion process of the display portion of the flexible display screen assembly, the flexible display screen assembly is configured to rotates the limiting member in a first direction; during a reduction process of the display portion of the flexible display screen assembly, the flexible display screen assembly is configured to rotates the limiting member in a second direction; the first direction is opposite to the second direction.

6. The electronic device according to claim 2, wherein the first portion comprises a first top plate; in condition of the first portion and the second portion being away from each other, the flexible support is disposed between the flexible display screen and the first top plate, to fill a gap between the flexible display screen and the first top plate.

7. The electronic device according to claim 1, wherein the first portion defines an accommodating space and a first opening connected to the accommodating space; the limiting member is arranged in the accommodating space and corresponds to the first opening, and a middle portion of the flexible display screen assembly is configured to pass through the first opening and is wound on the limiting member.

8. The electronic device according to claim 7, wherein the first portion comprises a first side plate disposed on a side away from the second portion, and the limiting member is disposed near the side plate.

9. The electronic device according to claim 8, wherein the first portion further comprises a second side plate and a third side plate; the second side plate is connected to an end of the first side plate, and the third side plate is connected to the other end of the first side plate; the first side plate, the second side plate, and the third side plate enclose the accommodating space; the limiting member is rotatably arranged on the second side plate and the third side plate.

10. The electronic device according to claim 7, further comprising a cover; wherein a bottom of the accommodating space is open, and the cover and the first portion are connected and cover the accommodating space.

11. The electronic device according to claim 1, further comprising a driving mechanism connected to the second portion and configured to drive the second portion to perform the relative movement away from the first portion, for driving the flexible display screen assembly to move, such that the display portion of the flexible display screen assembly is expanded.

12. The electronic device according to claim 11, wherein the driving mechanism comprises a motor and a first transmission structure connected to the motor and the second portion; the motor is configured to drive the second portion to move relative to the first portion through the first transmission structure.

13. The electronic device according to claim 12, wherein the first transmission structure comprises a first transmission gear connected to the motor and a rack fixed to the second portion, the rack engaging with the first transmission gear.

14. The electronic device according to claim 12, wherein the driving mechanism further comprises a second transmission structure connected to the reel and the first transmission gear; the motor is configured to drive the second portion to perform the relative movement away from the first portion, while driving the reel to rotate through the second transmission structure to release the flexible display screen assembly.

15. The electronic device according to claim 14, wherein the second transmission structure comprises a second transmission gear and a third transmission gear; the second transmission gear is fixed on the reel, and the third transmission gear is rotatably arranged on the first portion and engages with the second transmission gear and the first transmission gear; the first transmission gear is disposed on a side of the third transmission gear, and the second transmission gear is disposed on the other side of the third transmission gear opposite to the first transmission gear.

16. The electronic device according to claim 1, further comprising a camera arranged on the second portion.

17. The electronic device according to claim 16, further comprising a cover; wherein the cover comprises a first connecting portion and a second connecting portion capable of moving relative to the first connecting portion; the first connecting portion is fixedly connected to the first portion, and the second connection is fixedly connected to the second portion; the camera is configured to collect images through the second connecting portion and the second portion.

18. The electronic device according to claim 1, further comprising a recovery mechanism connected to the reel and configured to apply a force to the flexible display screen assembly, such that the flexible display screen assembly maintains a tendency to be wound on the reel.

19. An electronic device, comprising:
a housing, comprising a first portion and a second portion that are capable of moving relatively;
a reel, rotatably arranged in the first portion;
a limiting member, rotatably arranged in the first portion; and
a flexible display screen assembly; wherein an end of the flexible display screen assembly is connected to the second portion, and the other end of the flexible display screen assembly is arranged on the reel; a middle portion of the flexible display screen assembly is wound on the limiting member; the limiting member is configured to limit a shape of the flexible display screen assembly;
wherein in condition of the first portion and the second portion being away from each other, a display portion of the flexible display screen assembly is expanded.

20. An electronic device, comprising:
a housing, comprising a first portion and a second portion that are capable of moving relatively;
a limiting member, rotatably arranged in the first portion; and
a flexible display screen assembly; wherein an end of the flexible display screen assembly is connected to the second portion, and the other end of the flexible display screen assembly is arranged in the housing; a middle portion of the flexible display screen assembly is wound on the limiting member; the limiting member is configured to limit a shape of the flexible display screen assembly;
wherein in condition of the first portion and the second portion performing a relative movement away from each other, a portion of the flexible display screen assembly within the housing at least partially protrudes from the housing, for expanding a display portion of the flexible display screen assembly.
